# NEUE EUROPÄISCHE PATENTSCHRIFT

(11) **EP 2 952 330 B2**
(45) Veröffentlichungstag und Bekanntmachung des Hinweises auf die Entscheidung über den Einspruch: **30.04.2025**
(45) Hinweis auf die Patenterteilung: 04.01.2017
(21) Anmeldenummer: 15001647.5
(22) Anmeldetag: 07.08.2013
(51) Int. Cl.: B29C 55/06, B29C 47/00

(54) **BLASFOLIENANLAGE UND VERFAHREN ZUM HERSTELLEN EINER BLASFOLIENBAHN**
BLOWN FILM SYSTEM AND METHOD FOR PRODUCING A BLOWN FILM STRIP
INSTALLATION DE LAMELLE DE SOUFFLAGE ET PROCÉDÉ DE FABRICATION D'UNE BANDE DE LAMELLE DE SOUFFLAGE

(30) Priorität: 07.08.2012 DE 102012015462
(43) Veröffentlichungstag der Anmeldung: 09.12.2015
(62) Teilanmeldung aus: 13759424.8
(73) Patentinhaber: Reifenhäuser GmbH & Co. KG Maschinenfabrik, 53844 Troisdorf (DE)
(72) Erfinder: Gandelheidt, Edgar, DE - 67551 Worms (DE)
(74) Vertreter: Meissner Bolte Partnerschaft mbB

(56) Entgegenhaltungen:
- EP-A1- 1 707 338
- EP-A2- 0 873 846
- EP-B1- 0 442 253
- AT-B- 302 634
- AT-B- 311 666
- DE-A1- 10 305 740
- DE-A1- 102009 046 592
- DE-B4- 102004 012 488
- DE-B4- 102009 033 171
- DE-T2- 69 208 002
- DE-U1- 202007 007 034
- GB-A- 922 084

## Beschreibung

Die Erfindung betrifft eine Blasfolienanlage und ein Verfahren zum Herstellen einer Blasfolienbahn.

Blasfolienanlagen sind bekannt. Den Anlagen werden Kunststoffe in granulierter Form zugeführt, die dann in Extrudern unter hoher Druckeinwirkung zu einer viskosen Masse plastifiziert werden. Diese Masse wird in einem Blaskopf ringförmig ausgebildet und entweicht dem Blaskopf durch eine Ringdüse. Ab dem Verlassen der Ringdüse bildet die Masse bereits einen Folienschlauch. Der Folienschlauch wird nach oben entlang einer Schlauchbildungszone abgezogen, in welcher Druckluft in das Innere des Folienschlauchs eingebracht wird. Dies führt zu einem Querdehnen des Folienschlauchs. Durch ein aktives Kühlmittel für den aufsteigenden Folienschlauch wird in tolerierbarer Entfernung zur Ringdüse ein Abkühlen der Schmelze erreicht. Der Folienschlauch durchläuft auf seinem Weg nach oben in meist teilkristallinem Zustand einen Kalibrierkorb und anschließend eine Flachlegung, welche den Schlauch flachlegt. Die Flachlegeeinheit führt die Doppellagenfolienbahn einer Vorabquetschung zu. Die Vorabquetschung besteht meist aus einem Paar von Walzen, durch dessen Walzenspalt - oft "Nip" genannt - die Folie hindurch läuft. Der Vorabquetschung folgt eine Abquetschung, in welcher aus dem Folienschlauch endgültig eine praktisch luftfüllungslose Doppellagenfolienbahn gebildet wird. Spätestens von dort an, eher sogar schon ab der Vorabquetschung, liegt eine Doppellagenfolienbahn vor. Der Abstand von der Vorabquetschung zur Abquetschung ist so bemessen, dass die Folie im Verlauf des Transports zwischen den beiden Walzenpaaren vom Extrusionsprozess stammende Wärme abgeben kann. Auf diese Weise wird der Folienschlauch also zusätzlich gekühlt, sodass er anschließend weiter verarbeitet werden kann. Hierunter fällt beispielsweise ein Auftrennen des Folienschlauchs, sodass zwei separate Folienbahnen entstehen.

Viele Anlagen arbeiten ohne eine Vorabquetschung, sondern führen die Folie von der Flachlegung direkt der Abquetschung zu. Auch bei einem solchen Anlagenaufbau ist die aufsteigende Folie beim Abquetschwalzenpaar bereits so stark abgekühlt, dass ein kraftvoller Angriff an der Oberfläche der Folie keinen oder nur geringen Schaden zufügt. Denn die Abquetschung zieht die Folie im Normalfall mit deutlich höherer Geschwindigkeit nach oben als an der Ringdüse extrudiert wird. Ein beispielhaftes Geschwindigkeitsverhältnis liegt bei 10:1 bis 20:1. Die Blasfolie wird sofort beim Bilden der Schlauchform oberhalb der Ringdüse mit Druckluft von innen beaufschlagt und dadurch in Querrichtung gezogen. Gleichzeitig zieht das Abquetschwalzenpaar die Folie mit hoher Geschwindigkeit nach oben ab, sodass es unterhalb der Frostlinie zu einer Längsverstreckung kommt.

Insgesamt wird also der Folienschlauch unterhalb der Frostlinie biaxial verstreckt. Je nach geplanter Anwendung des Folienendprodukts kann der Längs- oder Querverstreckungsanteil überwiegen.

Eine Blasfolienanlage hat allerdings immer mit dem technischen Nachteil zu kämpfen, dass die optische Folienqualität nicht mit der Folienqualität von Gießfolien Schritt halten kann. Dies liegt daran, dass die aufsteigende Folienschlauchform relativ langsam abkühlt. Je länger der Abkühlprozess der Kunststoffschmelze dauert, desto trüber und glanzärmer wird die Folienoberfläche.

Um mit dem Abquetschwalzenpaar eine ausreichende Kraft auf die aufsteigende Folie ausüben zu können, muss die Folie allerdings relativ stark abgekühlt sein. Angesichts der langsamen Abkühlgeschwindigkeit der extrudierten Folie führt dies zu einer hohen Anlagenbauhöhe bei Blasfolienanlagen. Oberhalb der Abquetschung wird die Doppellagenfolienbahn daher so schnell wie möglich in die Horizontale umgelenkt, neben die Anlage geführt und von dort nach unten für die weiteren Behandlungsschritte. Üblicherweise steht neben der Anlage am Boden des Aufstellorts ein Wickler, welcher die Doppellagenfolienbahn zum weiteren Transport auf eine Rolle aufwickelt.

Vor dem Wickler sind mitunter Verstreckeinrichtungen vorgesehen, wobei im Rahmen der hier vorliegenden Patentanmeldung das "Verstrecken/Strecken" als Oberbegriff zum "Recken" und zum "Dehnen" verstanden wird.

Eine "Reck"-Anlage verreckt die Folie über 5 %, jedenfalls in Längsrichtung, vorzugsweise 50 % und mehr, oft auch bis zu 1.000 %,. Solche Anlagen werden oft als "MDO" bezeichnet, was für "machine direction orientation" steht, also für ein Orientieren der Kunststoffmoleküle in Maschinenrichtung, also der Transportrichtung des Werkstoffs durch die Anlage hindurch.

Eine Reckanlage ist beispielsweise in der DT 2 146 266 offenbart. Dort reversieren Extruder auf einem Gerüst oberhalb einer vertikal verlaufenden Blasstrecke. An das Abzugswalzenpaar schließt sich ein Walzensatz an, bis ein zweites Quetschwalzenpaar erreicht wird. Das zweite Quetschwalzenpaar läuft schneller als das erste, sodass der Doppellagenfolienbahn die Reckung in Maschinenrichtung aufgeprägt wird. Der Abkühlweg des Folienschlauchs vor dem ersten Quetschwalzenpaar ist einstellbar, sodass er es mit maximal möglicher Temperatur durchläuft, damit das Recken idealerweise ohne Temperaturzufuhr erfolgen kann. Auch das Reckverhältnis lässt sich einstellen, einfach durch das zweite Quetschwalzenpaar, da die dem Walzensatz zuzurechnenden Walzen passiv oder jedenfalls zu Beginn passiv sind.

Alternativ zu einer MDO kann als eine Verstreckeinrichtung vor dem Wickler ein sogenanntes Planlagepaket vorgesehen sein. Diese "dehnt" die Folie irreversibel üblicherweise zwischen 0,5 % und 5 % in Maschinenrichtung, was lediglich dazu dient, Lauflängenunterschiede über der Breite der Doppellagenfolienbahn und im Geradeauslauf der Folienbahn auszugleichen, sodass sich die Folie besser aufwickeln und weiterverarbeiten lässt.

Beide Verstreckeinrichtungen, also eine MDO und ein Planlagepaket, sind technisch insoweit gut vergleichbar, als dass sie ein Längsverstrecken der Folie vornehmen. Dazu läuft nach einer ersten, langsameren Walze unmittelbar darauffolgend oder beispielsweise nach weiteren, passiven Rollen eine schneller angetriebene Walze. Durch die Geschwindigkeitsdifferenz der beiden Walzen, die auch als Quetschwalzenpaare ausgebildet sein können, welche jeweils mit Haftreibung die Folie transportieren, entsteht eine Längenänderung der Folie.

Der Abstand zwischen den beiden Bereichen, in welchen die Folie mit der Umfangsgeschwindigkeit der jeweiligen Walze transportiert wird, wird als "Streckabschnitt" bezeichnet, oder in der Projektion auf die Maschinenrichtung als "Strecklänge".

In einem etwa zentralen Abschnitt der Umschlingung der Folienbahn um eine Walze wird die Folienbahn mit Haftreibung transportiert, somit mit der Umfangsgeschwindigkeit der Walze. Noch bevor die Folienbahn an einem Abhebepunkt die Walzenoberfläche verlässt, endet die Haftreibung. Dies ist vor allem dann von Bedeutung, wenn die nachfolgende Walze mit höherer Umfangsgeschwindigkeit läuft, die Folienbahn also schon an der Walzenoberfläche von Haftreibung zunächst zu schnellerer Gleitreibung übergeht und erst dann von der Walzenoberfläche abhebt.

Dasselbe Prinzip lässt sich auch beim Auflaufen auf eine Walze feststellen: Die Folienbahn hat bereits ab einem Anlegepunkt Kontakt zur umlaufenden Oberfläche der Walze, die Haftreibung beginnt aber erst jenseits des Anlegepunkts.

Der Einfachheit wird hier von "Punkten" gesprochen. Eine Folienbahn hebt sich von einer Walze an einer Abhebelinie ab und läuft mit einer Anlegelinie auf eine Walzenoberfläche auf. Bei einer seitlichen Betrachtung ist die zweidimensionale Folienbahn allerdings um eine Dimension zu einer Linie reduziert, dementsprechend reduzieren sich die Abhebe- und die Anlegelinie jeweils um eine Dimension zu Punkten.

Es sei darauf hingewiesen, dass für den Folientransport anstatt einer Walze in der Regel ebenso gut ein Quetschwalzenpaar verwendet werden kann. Die hier vorliegende Anmeldung spricht der Einfachheit halber meist nur von einer Walze, meint aber damit ebenso ein Quetschwalzenpaar als fachnotorisches Austauschmittel.

Ein Quetschwalzenpaar kann tendenziell ein sichereres Greifen der Folie bewirken, weil von beiden Seiten auf die Folienoberflächen gegriffen wird. Auch eine von einer Seite angreifende Walze kann allerdings eine ausreichende Längskraft auf die Folie ausüben, was beispielsweise von der Oberflächengestaltung der Walze im Zusammenspiel mit der jeweils zu verarbeitenden Folie und beispielsweise vom Umschlingungswinkel der Walze abhängt. Üblicherweise wird bei einer einfachen angetriebenen Walze jedenfalls eine Anpresswalze vorgesehen sein, um sicherer zu gewährleisten, dass die Folie tatsächlich von der angetriebenen Walze sicher unter Ausschluss von Durchrutschen gegriffen werden kann.

Der Erfindung liegt die Aufgabe zugrunde, den Stand der Technik zu verbessern oder ihm eine Alternative zur Verfügung zu stellen.

Nach einem ersten Aspekt der Erfindung löst diese Aufgabe eine Blasfolienanlage mit dem Merkmalen des Patentanspruchs 1, also mit einer Ringdüse zum Extrudieren eines Folienschlauchs, mit einer Schlauchbildungszone zum Längs- und Querziehen des Folienschlauchs, mit einem Kühlmittel für den sich in Maschinenrichtung bewegenden Folienschlauch, mit einer Flachlegung für den Folienschlauch zu einer Doppellagenfolienbahn und mit einem Abzugswalzenpaar jenseits des Kühlmittels zum Abziehen des Folienschlauchs, wobei in Maschinenrichtung jenseits des Abzugswalzenpaares eine Behandlungswalzenstrecke zum Längsstrecken der Doppellagenfolienbahn mit einem Heizmittel für die Doppellagenfolienbahn vorgesehen ist, wobei die Maschinenrichtung vertikal von unten nach oben ausgerichtet ist, die Behandlungswalzenstrecke oberhalb des Abzugswalzenpaares angeordnet ist, eine Aufheizstrecke vor der ersten Streckwalze vorgesehen ist und wobei oberhalb der Behandlungswalzenstrecke eine Reversiereinrichtung vorgesehen ist.

Begrifflich sei hierzu folgendes erläutert:
Das "Abzugswalzenpaar" kann - wie vorstehend bereits erläutert - bevorzugt ein einfaches Abzugswalzenpaar sein. Es fällt jedoch ebenso unter den Aspekt der hiesigen Erfindung, wenn dem Abzugswalzenpaar ein Vorabzugswalzenpaar vorgeschaltet ist, wobei der Abzug oft auch als Abquetschung oder Quetschwerk bezeichnet wird.

In Falle einer solchen Anordnung mit zwei Walzenpaaren liegt das letztendlich abquetschende Abzugswalzenpaar in der Regel oberhalb des Vorabzugswalzenpaars.

Gegenüber den darunter vorhandenen Walzen oder Walzenpaaren unterscheidet sich ein Abzugswalzenpaar prinzipiell dadurch, dass es den Schlauch entweder vollständig flachgelegt oder fast vollständig flachgelegt führt, also als Doppellagenfolienbahn. Das Abzugswalzenpaar greift auf beiden Seiten der flachgelegten Folie an ihrer Oberfläche an, auch um dadurch die Möglichkeit nach oben durchgedrückter Druckluft aus dem Innenraum des Folienschlauchs zu reduzieren.

Häufig beträgt der Durchmesser einer Abzugswalze etwa 300 mm, oft sind Durchmesser zwischen 200 mm und 400 mm oder mehr anzutreffen. Wenn zusätzlich Vorabzugswalzen vorgesehen sind, liegen diese häufig in derselben Größenordnung wie die Abzugswalzen.

Die "Behandlungswalzenstrecke" ist ein designierter Transportweg für die Doppellagenfolienbahn, innerhalb dessen die Doppellagenfolienbahn einer mechanischen und thermischen Behandlung unterzogen werden soll, wobei an ein irreversibles Strecken gedacht sei, und zwar in Maschinenrichtung, also auf lokaler Ebene betrachtet in der Folienlängsrichtung des Transports.

Für die Behandlungswalzenstrecke seien mindestens zwei, drei, vier, fünf, sechs oder mehr Walzen (oder Quetschwalzenpaare) vorgesehen, wobei diese zumindest zwei, drei, vier, fünf, sechs oder mehr verschiedene Funktionen innerhalb der Behandlungswalzenstrecke erfüllen sollen. Insbesondere sei bei den Funktionen gedacht an: Halten, Heizen, Strecken, Tempern, Kühlen, Breitstrecken, Prägen oder Laminieren.

Eine Walze kann mehrere Funktionen gleichzeitig erfüllen, so beispielsweise Halten und Heizen.

Im Normalfall wird eine möglichst geringe Anzahl an Walzen angestrebt.

Das "Heizmittel" soll ein aktives Heizmittel sein, also insbesondere versehen mit einer stromdurchfließbaren Heizspirale, einem Infrarotstrahler, einem Laseremitter, einer Heißwasserdurchströmungsleitung, einer Ölheizung, generell einer brennstoffbetriebenen Heizung mit einem Kreislauf und/oder einem vergleichbaren aktiven Heizmittel. Bei der Extrusion fällt viel Wärme an. Diese steigt ohnehin nach oben. Dies und die Tatsache, dass der Folienschlauch Wärme in sich trägt und in den Anzug transportiert, führt dazu, dass ohnehin die Anlagenteile oberhalb des Abzugswalzenpaares recht warm sind, wenn die Anlage läuft. Diese passiv heizenden Bauteile sind mit dem Heizmittel jedoch nicht gemeint. Vielmehr soll tatsächlich ein aktives Heizmittel vorgesehen sein.

In den meisten Fällen wird ein solches Heizmittel dadurch erkennbar sein, dass es zusätzlich zu der eigentlichen Heizung einen Temperatursensor aufweist, oder dass das Heizmittel eine Regelung aufweist, insbesondere mit einer Hysterese-Regelung.

In diesem Zusammenhang sei darauf hingewiesen, dass im Rahmen der hier vorliegenden Patentanmeldung wann immer von einer "Regelung" gesprochen wird, als Untermenge auch eine "Steuerung" inhaltlich umfasst sein soll. Mit der vorstellend genannten "Regelung" sei also insbesondere eine technische "Regelung" gemeint, also mit einem Sensor zum Abgleich der aktuellen Werte, aber auch eine "Steuerung" sei umfasst, also beispielsweise eine Heizspirale, welche nur intervallartig eingeschaltet und dann wieder ausgeschaltet wird.

Alternativ oder kumulativ zu einem Temperatursensor am Heizmittel kann ein Heizmittel auch dadurch leicht von einer im Betrieb heiß gewordenen Apparatur unterschieden werden, weil die Aufheizmittel bereits bei einer kalten Anlage schnell zu einem Aufheizen des hier relevanten Heizmittels eingesetzt werden können. Das Heizmittel ist also zu einem Aufheizen einsetzbar, welches schneller vonstatten geht als das Aufheizen der Anlagenkomponenten im oberen Bereich der Anlage in Betrieb der Anlage vonstatten gehen würde.

Mit einer Positionierung "oberhalb" des Abzugswalzenpaares sei in besonders bevorzugter Ausführung eine solche Gestaltung gemeint, bei welcher die Behandlungswalzenstrecke jedenfalls zum Teil vertikal direkt oberhalb des Abzugswalzenpaares liegt, bei einer Projektion auf eine horizontale Ebene, welche durch das Abzugswalzenpaar verläuft, also zu einer Überschneidung mit der Projektion des Abzugswalzenpaares führen würde.

Es kann schon ausreichen, wenn eine umgebende Linie um die Behandlungswalzenstrecke herum sich auf diese Weise projizieren lässt. Es ist also nicht notwendig, dass sich eine der Walzen der Behandlungswalzenstrecke mit einer Überschneidung auf die Horizontale projizieren lässt, wobei letzteres eine bevorzugte Ausführungsform darstellt.

Es wird als besonders vorteilhaft angesehen, wenn mindestens eine, zwei, drei, vier, fünf, sechs oder mehr Walzen der Behandlungswalzenstrecke achsparallel im Raum zu den Abzugswalzen liegen.

Jede einzelne Walze kann - wie bereits erwähnt - von je einem Quetschwalzenpaar ersetzt werden

Alternativ und kumulativ können die Walzen der Behandlungswalzenstrecke in der gleichen Größenordnung wie das Abzugswalzenpaar liegen, beispielsweise mit Durchmessern zwischen 200 mm und 400 mm oder mehr, bevorzugt zwischen 250 mm und 300 mm, gern auch deutlich kleiner als das Abzugswalzenpaar, beispielsweise mit Durchmessern zwischen 100 mm und 200 mm oder weniger.

Eine besonders kompakte Anordnung ergibt sich dann, wenn mindestens eine Walze der Behandlungswalzenstrecke, bevorzugt zwei, drei, vier, fünf, sechs oder mehr Walzen der Behandlungswalzenstrecke, sich jeweils mindestens zur Hälfte überschneidend auf eine oder beide der Abzugswalzen in die horizontale projizieren lässt bzw. lassen. Bei einer solchen Ausgestaltung liegen die Walzen der Behandlungswalzenstrecke recht kompakt oberhalb der Abzugswalzen.

Alternativ und kumulativ ist es von Vorteil, wenn sich Walzen der Behandlungswalzenstrecke bei Projektion auf die Horizontale auch untereinander mindestens zur Hälfte überlappen.

Es versteht sich, dass eine stärkere Überlappung als zur Hälfte bei geeigneter Gestaltung noch vorteilhafter sein kann.

Nicht ganz so kompakt bauend, aber immer noch im erweiterten Rahmen der Erfindung liegend, wäre ein etwas anderes geometrisches Verhältnis, bei welchem die vorgenannten Projektionen nicht direkt zu einer Überschneidung mit dem Abzugswalzen führen. Vielmehr sei eine kreisrunde Umgebende um das Abzugswalzenpaar herum gedacht. Die Umgebende bildet eine horizontal liegende, kreisrunde Fläche. Wenn in diese Fläche hinein die vertikale Projektion einer, mehrerer oder sogar aller Walzen der Behandlungswalzenstrecke fällt, und zwar zum Teil oder sogar ganz, ist immer noch eine sehr kompakte Anlagenform erreicht. Mit einfachen Worten liegen dann die Walzen der Behandlungswalzenstrecke im zwar nicht zwingend genau vertikal oberhalb des Abzugswalzenpaares, aber im näheren Umkreis.

In einem weiteren Sinne kann das "oberhalb" außerdem verwirklicht sein, wenn die Behandlungswalzenstrecke zwar seitlich neben dem Abzugswalzenpaar bzw. dem oberen Bereich der Blasfolienanlage vorgesehen ist, aber zumindest mit einer Walze der Behandlungswalzenstrecke geodätisch höher als das Abzugswalzenpaar angeordnet ist, bevorzugt mit mehreren oder sogar allen Walzen der Behandlungswalzenstrecke. Bei einem Walzenpaar sei in diesem Zusammenhang die geodätische Höhe des Walzenpaar-Nips betrachtet.

Von besonderem Vorteil ist die erfindungsaspektgemäße Anordnung der Behandlungswalzenstrecke oberhalb des Abzugswalzenpaares mit einem Heizmittel für die Doppellagenfolienbahn dazu einsetzbar, die Folie über eine Temperatur zu erhitzen, welche die Folie nach dem Durchlaufen der Abzugswalzen hat. Es wurde bereits erläutert, dass die Folie zum sicheren Durchlaufen des Abzugswalzenpaares eine Abkühlung erfahren haben muss, weil dort Kräfte auf die Folie ausgeübt werden. Es muss also eine Abkühlung unter eine Temperatur erfolgt sein, bei welcher Dimensionsstabilität vorliegt, um die Folie nicht zu schädigen.

Für eine mechanische Weiterverarbeitung der Folie, insbesondere in Form eines Streckens mittels Zugkraft, kann es aber von Vorteil sein, wenn die Folie erwärmt ist. Beispielsweise erwärmt eine MDO die Folie vor der mechanischen Längsreckung über eine leistungsstarke Heizwalze.

Die Erfindung hat erkannt, dass die Folie auf dem Weg nach oben anstatt nach unten von der von den Extrudern und vom Blaskopf aufsteigenden Wärme profitieren kann. Zwar ist es nicht ganz so leicht, die Folie beim Aufsteigen abzukühlen, dafür kann aber innerhalb der Behandlungswalzenstrecke davon ausgegangen werden, dass geringere Temperaturgradienten auftreten. Gegenüber der DT 2 146 266 lässt sich daher mit überraschend deutlich besserer Qualität produzieren.

Denn die Erfindung setzt dort an, wo noch die erste Wärme vorhanden ist, also die Folie gerade ausreichend zum Greifen durch das Abzugswalzenpaar abgekühlt ist - andersherum also noch relativ warm ist, daher nicht so stark aufgewärmt werden muss. Sie schlägt vor, das Heizmittel oberhalb des Abzugswalzenpaares vorzusehen, denn dort muss das Heizmittel nicht so stark nachheizen wie es bei anderen Positionen in der Anlage notwendig würde. Für eine irgendwie geartete mechanische Bearbeitung, welche Wärme erfordert, führt diese Anordnung also außerdem zu einer signifikanten Energieeinsparung.

Im Stand der Technik ist eine solche Anordnung nirgends zu finden: die EP 1 147 877 A2 offenbart in ihrer zweiten Ausführungsform in Figur 5 eine Produktionsanlage für Stretchfolie, wobei aber im Streckabschnitt zwischen den Dehnwalzenpaaren die erste Wärme nicht mehr vorhanden ist, weil dort die Doppellagenfolienbahn um das Abzugswalzenpaar herum zur Seite geführt und erst deutlich später gestreckt wird. Insbesondere liegt dort wenig oder keine aufsteigende erste Wärme vom Blasfolienprozess vor.

Dasselbe gilt für die US 6,413,346 B.

Die österreichische Patentschrift OE 311 666 offenbart ein Verfahren zum Verstrecken von Folienbahnen aus thermoplastischem Material, wobei an zwei Streckwalzen Elektroden zur elektrostatischen Aufladung der Folienbahn angeordnet sind.

Die US 7,396,498 B1 schlägt ein Blasfolienverfahren vor, bei welchem mittels einer Verstreckung und anschließendem Tempern die Resistenz der Folie gesteigert wird.

Die US 2,976,567 zeigt eine Gießfolienanlage, keine Blasfolienanlage. Daher existiert kein Abzugswalzenpaar, außerdem liegt der Effekt der großen Hitzeansammlung oberhalb des Blaskopfes und somit oberhalb eines Abquetschwalzenpaares gerade nicht vor.

In der US 7,396,498 B1 erfolgt eine optionale Dehnung der Doppellagenfolienbahn ganz unten direkt neben dem Blaskopf, also gewissermaßen auf dem Hallenboden.

Die US 5,458,841 sowie auch die EP 0 531 021 A1 führen ein Längsstrecken zwischen einem Vorabzugswalzenpaar und dem Abzugswalzenpaar durch, und zwar oberhalb der aufsteigenden Blasfolie. Es ist dort aber gerade keine Heizung für die Folie vorgesehen, sondern vielmehr bezeichnet die Druckschrift den Streckabschnitt als "Kalt-Orientierungs-Zone". Außerdem findet oberhalb des letztendlichen Abzugswalzenpaars keine mechanische Behandlung mehr statt. Stattdessen wird dort über eine Umlenkwalze sofort in die Horizontale und schließlich nach unten weiter geführt.

In der DT 1 504 461 ist ein Innendorn zum Aufheizen des Folienschlauchs vorgesehen. Das erste Abzugswalzenpaar schließt nicht. Das Strecken nach dem ersten Abzugwalzenpaar erfolgt durch hindurchströmenden Überdruck.

In der österreichischen Patentschrift Nr. 267160 wird die Blasfolie innerhalb des Abzugswalzenpaares mit einer Prägung versehen.

Die AT 342 292 sieht vor, dass die Schlauchfolie durch eine Reihe von Infrarotheizkörpern geführt wird, welche die Temperatur der Schlauchfolie auf die zur Verstreckung erforderliche Temperatur anheben. Die Schlauchfolie wird sodann in der Richtung quer zur Extrusionsrichtung verstreckt, indem Druckluft in sie durch ein Rohr eingeleitet wird, und gleichzeitig in ihrer Längsrichtung mit nicht dargestellten Mitteln verstreckt, welche eine luftdichten Verschluss des Schlauchs bewirken und sie mit einer Geschwindigkeit abziehen, die größer als diejenige Geschwindigkeit ist, mit welcher sie von Klemmwalzen transportiert wird. Die gerade nicht dargstellten Mittel für die Längsverstreckung sind also in hiesigem Sinne die Abzugswalzen, und jenseits von denen soll offenbar keine weitere Behandlung erfolgen, ganz abgesehen davon, dass die Druckschrift von oben nach unten extrudiert und daher den Wärmevorteil der aufsteigenden Wärme ohnehin schlechter nutzen kann.

Auch die CH 432 815 beschäftigt sich mit dem Aufbau der Anlage vor dem Abzugswalzenpaar, aber nicht mit etwa mit der Gestaltung jenseits des Abzugswalzenpaares.

Dasselbe gilt für die CH 475 082.

Die DE 21 32 259 C3 beschreibt einen eher fernliegenden Stand der Technik.

Die DE 102 42 174 A1 erläutert eine herkömmliche Blasfolienanlage, wobei mittels des Verhältnisses zwischen Umfangsgeschwindigkeit der Abquetschwalzen und Innendrucks der Längsstreckfaktor bzw. der Aufblasfaktor eingestellt werden sollen.

Die US 6,447,278 B1 offenbart eine seitliche Wegführung der Doppellagenfolienbahn direkt nach dem Abzugswalzenpaar.

Die US 4,086,045 zeigt abermals eine Gießfolienanlage, welche somit hier nicht von hoher Relevanz ist, weil keine Behandlung oberhalb der aufsteigenden Wärme vom Extruder erfolgt.

In der US 3,768,949 ist eine frühe Ausführungsform einer Reversiereinrichtung gezeigt, wobei der Abzug der Schlauchfolie durch zwei nicht aneinander pressende Einzelwalzen als Abzug erfolgt, welche dennoch gemeinsam ein Abzugswalzenpaar im weiteren Sinne darstellen.

In der US 3,340,565 sind drehbare Kühlwalzen dargestellt, damit die Abkühlzeit stufenlos eingestellt werden kann.

Die US 3,116,787 zeigt wiederum eine Gießfolienanlage, welche mangels Bearbeitungsschritten oberhalb des heißen Extruders fernliegender Stand der Technik ist.

In der US 4,676,728 ist eine Reversiereinrichtung mit vertikal stehenden Wendestangen oder Walzen vorgesehen. Dasselbe gilt für die US 5,727,723.

In der DE 35 08 626 C1 können Walzen zum Einfädeln des ankommenden Folienschlauches beim Anfahren der Blasfolienanlage auseinander gefahren werden. Dann erfolgt ein kammweises gegeneinander-Verfahren der Wendestangen und der Umlenkwalzen bis in eine Betriebsposition.

Auch in der DE 692 08 002 T2 erfolgt ein Längsverstrecken des Folienschlauchs nur oberhalb einer Vorabzugswalze, also nicht nach dem Abzugswalzenpaar. Außerdem wird in der dortigen Kalt-Orientierungs- Zone nicht aufgeheizt.

In der GB 2 201 371 A wird eine Schlauchfolie zunächst von einer Rolle abgerollt, dann nach oben oberhalb einer Blasfolienanlage geführt, dort aufgeheizt, dann vertikal nach unten geführt und dabei aufgeblasen, und schließlich abgezogen und wieder aufgewickelt. Ein Aufheizen nach dem Abzugswalzenpaar ist nicht vorgesehen, außerdem ist ein heißer Blaskopf nicht vorgesehen, sodass die über ihm entstehende Hitze nicht vorhanden und somit nicht nutzbar ist.

Die WO 2005/102666 A1 zeigt eine Blasfolienanlage, bei welcher entweder der Abstand zwischen dem Vorabzugswalzenpaar und dem Abzugswalzenpaar mittels eines vertikalen Verstellmechanismus' verstellbar ist, oder in welchem eine Drehscheibe mit verschiedenen Walzen vorgesehen ist, wobei in beiden Fällen die Doppellagenfolienbahn nach dem Abzugswalzenpaar erst seitlich und dann herab geführt wird.

Oberhalb der Behandlungswalzenstrecke ist eine Reversiereinrichtung vorgesehen. Die Reversiereinrichtung sorgt mittels eines reversierenden Verdrehens von Wendestangen und/oder Walzen für ein regelmäßiges Verlegen etwaiger ungleichdicker Stellen des Folienschlauches zu einem in Summe recht gleichmäßigen Aufwickelergebnis auf der Rolle. Eine Reversiereinheit kann beispielsweise der EP 0 673 750 A1 entnommen werden.

Eine Reversiereinrichtung soll im Rahmen der hier vorliegenden Patentanmeldung nicht als eine "Behandlungswalzenstrecke" aufgefasst werden.

Eine Behandlungswalzenstrecke umfasst außerdem bevorzugt ausschließlich Walzen, denkbar sind auch Wendestangen oder andere Mittel, um Folie zu führen oder umzulenken.

Außerdem beinhaltet eine Reversierung keine aktive Heizung für die Doppellagenfolienbahn.

Nach einem zweiten Aspekt der vorliegenden Erfindung - hier nur abhängig beansprucht - löst die gestellte Aufgabe eine Blasfolienanlage, mit einer Ringdüse zum Extrudieren eines Folienschlauchs, mit einer Schlauchbildungszone zum Längs- und Querziehen des Folienschlauchs, mit einem Kühlmittel für den sich in Maschinenrichtung bewegenden Folienschlauch, mit einer Flachlegung für den Folienschlauch zu einer Doppellagenfolienbahn und mit einem Abzugswalzenpaar jenseits des Kühlmittels zum Abziehen des Folienschlauchs, wobei jenseits des Abzugswalzenpaares eine Behandlungswalzenstrecke zum Längsstrecken der Doppellagenfolienbahn, ggf. mit einem Heizmittel, für die Doppellagenfolienbahn vorgesehen ist, wobei die Behandlungswalzenstrecke eine erste Streckwalze und eine der ersten Streckwalze folgende zweite Streckwalze aufweist, wobei das Abzugswalzenpaar dazu eingerichtet ist, mit einer Abzugswalzengeschwindigkeit angetrieben zu sein, und wobei die zweite Streckwalze dazu eingerichtet ist, mit einer Streckgeschwindigkeit zu laufen, welche höher liegt als die Abzugswalzengeschwindigkeit und als die Geschwindigkeit der ersten Streckwalze, sodass im Betrieb der Blasfolienanlage die Doppellagenfolienbahn zwischen der ersten und der zweiten Streckwalze in Maschinenrichtung gestreckt wird, wobei sich die Blasfolienanlage dadurch gekennzeichnet, dass innerhalb der Behandlungswalzenstrecke vor und/oder an der ersten Streckwalze eine ein Durchschlagen von Zugkraft von der zweiten Streckwalze auf das Abzugswalzenpaar hemmende Durchschlagbremse vorgesehen ist.

Begrifflich sei hierzu erläutert, dass die zweite Streckwalze durch ihre höhere Umfangsgeschwindigkeit eine Zugkraft auf die auf sie zulaufende Doppellagenfolienbahn ausübt. Diese Zugkraft folgt im quasi-stationären Produktionsprozess dem Prinzip des "actio = reactio". Daher muss es in Gegenmaschinenrichtung der zweiten Streckwalze ein Lager zur Aufnahme dieser Zugkraft geben. Nach dem Stand der Technik der DT 2 146 266 war dieses Lager das Abzugswalzenpaar. Die hier vorliegende Erfindung hat aber erkannt, dass dadurch bei weitem nicht das maximale Potential aus einer Blasfolienanlage herausgeholt werden kann. Denn um die Zugkraft der schnell angetriebenen Streckwalze aufnehmen zu können, muss die Anpresskraft der Abzugswalzen gegeneinander recht hoch sein. Die Frage, ob sich die beiden Folienlagen im Abzugswalzennip verschweißen oder nicht, ist aber nicht nur von der Temperatur abhängig, sondern auch vom Druck der beiden Folienbahnen im Nip aufeinander. Wenn also die Nip-Anpresskraft erhöht ist, um die Zugkraft aus der schnell angetriebenen Streckwalze aufnehmen zu können, muss die Folie dementsprechend mit einer niedrigeren Temperatur durch den Abzugswalzennip gefahren werden. Wenn hingegen der hier vorstellten Erfindung gefolgt wird und die Durchschlagbremse zwischen der (ggf. ersten, jedenfalls aber der zweiten) schneller als die Abzugswalzen angetriebenen Streckwalze installiert ist, dann wird die aus dem Streckabschnitt auf die Abzugswalzen gelangende Zugkraft vermindert oder sogar eliminiert. Die Anpresskraft der beiden Abzugswalzen im Abzugswalzennip kann dann auf ein Minimum eingestellt werden und muss idealerweise lediglich anhand derjenigen Parameter dimensioniert werden, die in Maschinenrichtung stromaufwärts des Abzugswalzenpaares herrschen. Denn idealerweise sollte sogar gar keine Zugkraft aus dem Streckabschnitt zum Abzugswalzenpaar gelangen und dort gelagert werden müssen.

Als "Durchschlagbremsen" kommen verschiedene Maßnahmen in Betracht. Nicht darunter fallen sollen einfache passive Rollen. Darunter fallen sollen aber jedenfalls folgende drei konkrete Umsetzungen:

So kann als erste der drei konkreten Varianten die Zugkraftdurchschlagbremse eine geschwindigkeitsgeregelte Haltewalze aufweisen. Darunter sei eine Walze verstanden, deren Geschwindigkeit, wobei bei Walzen immer die Umfangsgeschwindigkeit zu verstehen ist, stufenlos oder stufenbehaftet regelbar ist. Insbesondere sei daran gedacht, dass die Geschwindigkeit der Haltewalze in Relation zur Geschwindigkeit der zweiten Streckwalze einregelbar sein soll.

Die Haltewalze kann die erste Streckwalze sein, sie kann aber auch vor der ersten Streckwalze angeordnet sein.

Die bevorzugte Ausführungsform sieht vor, dass die Haltewalze direkt oberhalb des Abzugswalzenpaares angeordnet ist und sich daran die erste und die zweite Streckwalze anschließen. Bei einer solchen Ausgestaltung kann die erste Streckwalze entweder passiv sein, oder sie kann langsamer als die zweite Streckwalze geregelt angetrieben sein, vor allem zumindest in etwa mit der Geschwindigkeit des Abzugswalzenpaares.

Als zweite konkrete Variante sei angedacht, dass die Zugkraftdurchschlagbremse eine Andrückwalze aufweist. Eine Andrückwalze erschwert ein Durchrutschen der Doppellagenfolienbahn um die Oberfläche einer Walze herum. So kann in einer bevorzugten Ausführungsform an die Haltewalze eine Andrückwalze angestellt sein. In der besonders bevorzugten Ausführungsform ist auch bei einer solchen Konstellation die Haltewalze die erste Walze der Behandlungswalzenstrecke und/oder die letzte Walze vor der ersten Streckwalze.

Die dritte konkret zu nennende Variante sieht vor, dass die Zugkraftdurchschlagbremse eine Umschlingungswinkelführung zum Umschlingen einer ersten Walze innerhalb der Behandlungswalzenstrecke mit zumindest 160 °, bevorzugt zumindest 180 °, aufweist. Bevorzugt ist die erste Walze die Haltewalze. Als eine Alternative zur Haltewalze lässt sich vorstellen, eine optionale Heizwalze vorzusehen, bevorzugt seitlich beabstandet zur Walzenfolge aus der Haltewalze und den zwei Streckwalzen, sodass eine Folienbahn von zwei Seiten geheizt werden kann, nämlich zunächst auf einer ersten Seite von der optionalen Heizwalze, dann auf ihrer zweiten Seite von der Haltewalze, welche gleichzeitig als Heizwalze ausgestaltet sein kann, was sich besonders bei dickeren Folien vorteilhaft auswirkt.

Es mag zum Erreichen einer niedrigeren Bauhöhe der Blasfolienanlage vorteilhaft sein, eine quer liegende Ausrichtung für die Walzen der Behandlungswalzenstrecke vorzusehen, wobei eine "quer" liegende Ausrichtung dann vorliegen soll, wenn die Doppellagenfolienbahn eher horizontal als vertikal läuft. Insbesondere sei an eine zumindest im westlichen horizontal verlaufende Doppellagenfolienbahn gedacht. Angesichts des Verlaufs der Folienbahn um Walzen oder Wendestangen herum kann der Verlauf durch den tatsächlichen Folienlauf und/oder durch die Lage der Drehachsen zweier Walzen oder Wendestangen zueinander definiert sein.

Insbesondere sei daran gedacht, dass die Verbindungswege zwischen zwei, drei, vier, fünf, sechs oder mehr Walzen entweder ausnahmslos oder mit zwischen ihnen liegenden Ausnahmen eher horizontal als vertikal verlaufen.

Besonders bevorzugt sollen zwei, drei, vier, fünf, sechs oder mehr Walzen zueinander horizontal angeordnet sein.

Zwar ist aus der US 6,413,346 B1 bereits bekannt, eine Behandlungswalzensstrecke mit mehreren Walzenpaaren und dazwischen liegenden Streckabschnitten in einem Querverlauf zur vertikalen Extrusionsrichtung vorzusehen. Die dortigen Walzenpaare liegen aber genau horizontal seitlich vom Abzugswalzenpaar und führen dann weiter hinab zu einem Wickler. Eine Wendestangeneinheit ist in der Druckschrift nicht offenbart. Daher macht es dort Sinn, die Folienbahn quer zur Seite zu führen, weil sie schließlich anschließend herabgeführt werden muss.

Wäre in der Druckschrift eine Reversiereinrichtung oberhalb des Abzugswalzenpaares vorhanden, dann müsste die Folie hingegen nach der Behandlungswalzenstrecke wieder oberhalb des Abzugs ankommen. Dieser Gedanke hat bisher die Anlagenkonstrukteure davon abgehalten, die Folienbahn auf dem - ohnehin recht kurzen - Stück zwischen Abzug und Reversierung quer zu führen, geschweige denn horizontal zu führen. Denn jedes Wegstück, um welches die Folienbahn dort seitlich geführt wird, muss sie anschließend wieder zurück geführt werden, was eine Mehrzahl an Walzen notwendig macht.

Der hier vorliegende Aspekt hat nun allerdings erkannt, dass es mitunter Sinn machen kann, eine größere Anzahl von Walzen und/oder Wendestangen in einer Behandlungswalzenstrecke vorzusehen. Eine Blasfolienanlage mit einer Reversiereinheit baut aber deutlich niedriger, wenn die mehreren Walzen der Behandlungswalzenstrecke zwischen Abzug und Reversiereinheit möglichst horizontal angeordnet werden. Mit der geringeren Bauhöhe ist auch eine geringere Hallenhöhe notwendig, sodass ganz erhebliche Kosten eingespart werden können.

Die Behandlungswalzenstrecke kann eine Temperaturregelung aufweisen, welche das Heizmittel die Doppellagenfolienbahn eingangs der Behandlungswalzenstrecke um weniger als 80 K erwärmen lässt, bevorzugt um weniger als 30 K.

Es ist belanglos, ob die Regelung die aktuelle Temperatur beispielsweise an der Doppellagenfolienbahn abgreift oder an der Walzenoberfläche, wenn eine Heizwalze verwendet wird. In der Praxis wird eine Variante bevorzugt, bei welcher die Temperatur eines Fluidrücklaufs von der Walze gemessen wird.

Theoretisch kann sogar die Regelung ganz ohne einen Temperatursensor auskommen, denn bei einem vorgegebenen Temperaturverlauf der Schmelze am Blaskopf und darüber ansteigend zum Abzug ist relativ genau bekannt, mit welcher Temperatur die Doppellagenfolienbahn in die Behandlungswalzenstrecke einläuft.

Der Clou bei dem Heizmittel in der Behandlungswalzenstrecke liegt darin, eine Erwärmung vorzusehen, die aber nur geringfügig über die einlaufende Temperatur der Doppellagenfolienbahn geht.

Generell sei darauf hingewiesen, dass die im Rahmen der hier vorliegenden Patentanmeldung genannten Temperaturangaben als technische mittlere Temperaturen zu verstehen sind. Die Temperaturen schwanken in der Praxis über die Länge einer Walze, also über die Breite der Folienbahn, meist um jedenfalls 1 bis 4 K.

Hierdurch kann die Energiebilanz der Blasfolienanlage optimiert werden: Die Kühlung des nach oben gezogenen Folienschlauchs wird so eingestellt, dass er bei Erreichen des Kalibrierkorbs und an den Abzugswalzen gerade ausreichend kühl ist; Er durchläuft dann die mechanisch kritische Stelle an der Abzugswalze, und müssen danach nur um ein sehr geringes Maß erwärmt werden, um leicht verstreckbar zu sein.

Beispielsweise kann Polypropylen für die Folien verwendet werden. Im endothermen Prozess, also während des Aufschmelzens und Ausblasens, tritt das Schmelzen bei etwa 160 °C bis 168 °C ein. Während des Ansteigens, also während des Abkühlens der Folie, tritt die Kristallisation hingegen etwa bei 115 °C bis 135 °C ein. Unterhalb dieser Temperaturen lässt sich die Doppellagenfolienbahn betriebssicher vom Abzugswalzenpaar abquetschen und damit ziehen. Nach dem Abzugswalzenpaar reicht dann schon eine Aufheizung um beispielsweise 10 K bis 50 K aus, um die Folie zwar nicht wieder an den Schmelzpunkt zu bringen, aber dennoch die Folienbahn prozesssicher zu verstrecken.

Weiter beispielsweise sei angenommen, die Raumlufttemperatur Tu betrage am Aufstellort einer Blasfolienanlage etwa 30 °C. Dann erreicht die Folienbahn bei herkömmlichen Anlagen die Streckeinrichtung also mit etwa 30 °C, meist mit leicht darüber liegender Temperatur. Wegen der starken Luftbewegung an der Oberfläche der Folienbahn - infolge der schnellen Vorwärtsbewegung der Folienbahn - ist generell aber ein schneller Temperaturabfall der Folienbahn zu beobachten, sobald die Folienbahn nach Durchlaufen des Abzugs seitlich fortgeführt wird. Denn am Abzug hat die Doppellagenfolienbahn meist eine Temperatur zwischen etwa 60 °C und etwa 80 °C.

Für den geplanten Dehnvorgang bei einem Planlagepaket reichen aber meist Temperaturen um 80 °C bereits aus. Für einen Prestretchvorgang einer MDO reichen meist Temperaturen um 85 °C aus. Und für ein Recken im Rahmen einer MDO sollten etwa Temperaturen von 100 °C bis 105 °C für Polyethylen, von 130 °C bis 140 °C für Polypropylen und um 70 °C für Polyamid in der Folienbahn vorherrschen. Somit reicht direkt nach dem Abzug je nach Anwendungsfall bereits eine Erwärmung um nur wenige K aus, oder sogar ein reines Aufrechterhalten der Temperatur, was ebenfalls von einen Heizmittel ermöglicht wird.

In einer besonders bevorzugten Ausführungsform weist die Behandlungswalzenstrecke eine Heizwalze zum Erwärmen der Doppellagenfolienbahn für eine leichtere Behandlung innerhalb der Behandlungswalzenstrecke auf.

Eine Heizwalze ist eine Walze, welche im mechanischen Eingriff mit der Doppellagenfolienbahn steht, sobald die Blasfolienanlage im Betrieb läuft. Entlang eines vorbestimmten Abschnitts der Walzenoberfläche, gegeben durch den Umschlingungswinkel, liegt die Doppellagenfolienbahn an der Heizwalze an. Insbesondere während dieser Kontaktphase tritt eine gute Wärmeströmung von der Heizwalze auf die Folie ein.

Die Heizwalze selbst ist bevorzugt in ihrem Inneren, beispielsweise möglichst nah an der Oberfläche, als aktives Heizmittel ausgestaltet.

Es kann vorgesehen sein, dass eine Heizwalze zum Erzeugen eines segmentierten Temperaturprofils entlang ihrer Walzenlänge eingerichtet ist. So kann beispielsweise eine Segmentierung in zwei, drei, vier oder mehr Segmente vorgesehen sein. Die einzelnen Segmente können beispielsweise von verschiedenen Heizfluiden durchflossen sein, oder es können aktive Heizmittel in oder an der Walze vorgesehen sein. Wenn die Walze ein segmentiertes Temperaturprofil erzeugen kann, dann kann damit der Folie ein gezieltes Temperaturprofil aufgeprägt werden.

Eine Heizstation für die Doppellagenfolienbahn kann auch anders als mit einer Heizwalze ausgeführt sein, beispielsweise mit einer Heizstrecke mit Wärmestrahlern.

Ein analoger Gedanke lässt sich auch auf sämtliche nachstehenden Arten von "Walzen" übertragen, die jeweils nur als - wenn auch bevorzugte - Exempel für "Stationen" zu verstehen sind.

Bevorzugt weist die Heizstation, also vor allem Heizwalze, einen Temperaturmesser auf, um innerhalb eines fest vorgebbaren Temperaturintervalls einregelbar zu sein. Dieses Temperaturintervall soll derart einregelbar sein, dass die resultierende Temperatur der ablaufenden Doppellagenfolienbahn weniger als 80 K, bevorzugt weniger als 30 K oder 20 K, über derjenigen der zulaufenden Doppellagenfolienbahn liegt.

### An drei Beispielen verdeutlicht:

Bei einem Planlagepaket in der Behandlungsfolienstrecke kann beispielsweise die Zulauftemperatur der Doppellagenfolienbahn 60 °C betragen, also eine übliche Temperatur am Abzugswalzenpaar. Wenn für das Dehnen im Rahmen des Planlagepakets eine Temperatur von 80 °C gewünscht ist, dann soll die Heizstation die Doppellagenfolienbahn um lediglich etwa 20 K aufheizen. Verglichen mit einer herkömmlichen Anlage, in welcher die Doppellagenfolienbahn beispielsweise am Hallenboden erst gedehnt wird, also mit einer Zulauftemperatur zum Planlagepaket von etwa 30 °C, was ein Nachheizen von etwa 50 K erfordert, wird nun die Energiemenge zum Nachheizen von 30 K eingespart.

Es wird vorgeschlagen, dass die Doppellagenfolienbahn im Ablauf der Heizwalze zwischen plus 5 K und plus 80 K temperaturerhöht ist; Bevorzugte Werte liegen bei
a. plus 5 K bis plus 20 K für ein Planlagepaket, vor allem mit Ablauftemperatur von etwa 80 °C;
b. plus 5 K bis plus 25 K für ein Prestretchen, vor allem mit etwa 85 °C im Ablauf.

Es wird vorgeschlagen, dass die Behandlungswalzenstrecke einen Streckabschnitt für ein Längsziehen der Doppellagenfolienbahn aufweist.

Vorstehend wurde bereits erläutert, dass ein Streckabschnitt dadurch konstruktiv umgesetzt wird, dass in Maschinenrichtung zunächst eine Haltewalze oder ein anderes Haltemittel vorgesehen ist, worauf der Streckabschnitt an seiner maschinenrichtungsabwärtigen Seite eine Streckwalze aufweist, oder wie vorstehend erläutert ein Streckwalzenpaar, zum schnelleren Transportieren der Doppellagenfolienbahn als an der Haltewalze.

Beispielsweise können bei gleichgroßen Durchmessern einer Haltewalze und einer Streckwalze an der Streckwalze eine höhere Drehgeschwindigkeit und an der Haltewalze eine niedrigere Drehgeschwindigkeit eingestellt sein. In beiden Fällen geht es um die betragsmäßige Umfangsgeschwindigkeit. Je nachdem, wie die Folie durch die Behandlungswalzenstrecke läuft, kann ein Streckabschnitt sowohl mit gleich orientiert laufenden Walzen als auch mit entgegengesetzt orientiert laufenden Walzen erreicht werden. Wenn die Folie innerhalb des Streckabschnitts die direkte Verbindung der beiden Walzenachsen kreuzt, dann sollen die Walzen in entgegengesetzter Richtung verlaufen, anderenfalls im gleichgesetzten Drehsinn.

Ein "Reck"-Verhältnis innerhalb des Streckabschnitts beträgt vorzugsweise 1:2 bis 1:4, insbesondere eher 1:2 für Pre-Stretch-Folie für den landwirtschaftlichen Einsatz. Generell ist ein Reckverhältnis im Streckabschnitt von 1:2 bis 1:10 als vorteilhaft anzusehen, insbesondere aber der zunächst genannte Rahmen von 1:2 bis 1:4.

Ein "Dehn"-Verhältnis innerhalb des Streckabschnitts beträgt mehr als 1:1, aber vorzugsweise nur bis etwa 1:1,05.

Die Haltewalze kann bevorzugt zwei Funktionen übernehmen, also beispielsweise durch eine Heizwalze verkörpert werden oder auf andere Weise eine Heizstation verkörpern.

Generell sei darauf hingewiesen, dass im Rahmen der hier vorliegenden Patentanmeldung die unbestimmten Zahlwörter "ein", "zwei" usw. nicht als "genau-ein", "genau zwei" usw. verstanden werden sollen, sondern im Normalfall als unbestimmte Artikel. Eine Aussage der Art "ein ...", "zwei ..." usw. ist daher als "mindestens ein ...", "mindestens zwei ..." usw. zu verstehen, sofern sich nicht aus dem jeweiligen Kontext ergibt, dass etwa nur "genau ein", "genau zwei" usw. gemeint sind.

In einem besonders weitgehenden Gedanken kann sogar die Abzugswalze bzw. das Abzugswalzenpaar, idealerweise in Form eines Abquetschwalzenpaares, das Heizmittel darstellen, und eventuell sogar gleichzeitig als Haltewalze dienen. In der Regel wird dies aber zu einer verschlechterten Ausführungsform führen, weil eine beheizte Abzugswalze immer die Gefahr birgt, die Folie noch in dem mechanischen Eingriff des Abziehens bereits zu sehr zu erwärmen und sie dadurch unkontrolliert zu beschädigen. Letztendlich wirkt das Abzugswalzenpaar auch für die Behandlungswalzenstrecke natürlich indirekt als Haltemechanismus, weil es einen bestimmten, recht engen Geschwindigkeitsbereich vorgibt. Dennoch wird aus den vorstehend geschilderten Gründen bevorzugt, wenn zwischen dem Abzugswalzenpaar und der deutlich schneller transportierenden Streckwalze mindestens eine gegenüber der Streckwalze langsam transportierende Walze als Haltewalze vorgesehen ist.

Der Streckabschnitt oder die Strecklänge als solcher kann idealerweise eine Länge von höchstens 120 cm aufweisen, insbesondere eine Länge von höchstens 50 cm oder 15 cm, vor allem höchstens 10 cm oder 5 cm.

Es hat sich bei Versuchen der Erfinder gezeigt, dass ein möglichst kurzer Streckabschnitt von Vorteil ist, um eine Quereinschnürung der Doppellagenfolienbahn möglichst klein zu halten. Andererseits erleichtert es das Einfädeln der Doppellagenfolienbahn beim Anfahren der Anlage erheblich, wenn zwischen den Walzen der Behandlungswalzenstrecke ein lichter Abstand von mindestens 5 cm herrscht, bevorzugt von mindestens 10 cm. Der Folienanfang ist dann leichter zwischen den Walzen hindurchfädelbar.

Es wird als bevorzugt betrachtet, wenn mindestens eine der Walzen, welche die Behandlungswalzenstrecke bilden, aus ihrer Position verfahrbar oder verschwenkbar ist, um das Einfädeln zu erleichtern. Dieses Prinzip kann ohne erfinderische Tätigkeit aus der US 4,086,045 übernommen werden.

Es wird vorgeschlagen, dass die Behandlungswalzenstrecke nach dem Streckabschnitt eine Temperwalze oder ein Temperwalzenpaar oder eine anders gestaltete Temperstation zum Entspannen der Doppellagenfolienbahn nach dem Strecken aufweist.

Prototypenversuche des Erfinders haben gezeigt, dass sich ein Memoryeffekt der im Streckabschnitt in Maschinenrichtung gestreckten Folie erheblich reduzieren lässt, wenn dem Streckabschnitt eine zweite aktive Heizeinrichtung folgt, insbesondere in Form einer Temperstation mit einer Temperwalze.

Die erste Temperwalze kann auch durch die Streckwalze dargestellt werden, und/oder es können eine oder mehrere separate Temperwalzen vorgesehen sein.

In der Temperstrecke soll die Doppellagenfolienbahn eine Temperatur zwischen minus 5 K und bis zu plus 30 K annehmen, bevorzugt zwischen um plus/minus 0 K und plus 20 K, jeweils gegenüber der Temperatur der Doppellagenfolienbahn im Bereich des Streckens.

Besonders bevorzugt ist die Streckwalze sogleich als eine erste Temperwalze ausgebildet, woraufhin noch eine erste oder sogar eine zweite weitere Temperwalze folgen können.

Bevorzugt weisen mehrere Temperwalzen dieselbe Temperatureinregelung auf, sind also so eingeregelt, dass sie der Doppellagenfolienbahn im Ablauf dieselbe Temperatur mitgeben. In der Praxis wird dies beispielsweise - unter Inkaufnahme von Abweichungen - leicht anhand eines auf gleiche Temperatur eingestellten Rücklaufs von Heizfluid eingestellt.

Von dem Gedanken der "selben Temperatureinregelung" wird nicht abgewichen, wenn aufeinander folgende Walzen geringfügig unterschiedliche Temperaturen der Doppellagenfolienbahn mitgeben, insbesondere in einer Schwankungsbreite von plus/minus 5 K oder plus/minus 10 K.

Es kann wünschenswert sein, gezielt eine auf- oder absteigende Temperaturkaskade in der Doppellagenfolienbahn mittels der Heiz- und/oder Temperwalzen zu erzeugen.

Generell kann jede Station, also vor allem Heizstation, Temperstation und Kühlstation, mehrere nacheinander von der Doppellagenfolienbahn zu durchlaufende Walzen aufweisen. Dadurch wird das Einregeln der Folientemperatur auf die gewünschten Werte erleichtert.

Schließlich wird vorgeschlagen, dass die Behandlungswalzenstrecke eine Kühlstation für die Doppellagenfolienbahn aufweist, insbesondere eine Kühlwalze, vor allem mit einem aktiven Kühlmittel.

In der vorstehend genannten Temperaturkaskade wird vorgeschlagen, dass die Kühlstation der Doppellagenfolienbahn einen Sprung der Temperatur zwischen minus 5 K und minus 80 K aufprägt, insbesondere zwischen minus 10 K und minus 20 K, insbesondere auf etwa 60 °C und/oder etwa bis auf Raumtemperatur und/oder bis auf etwa 40 °C bis 60 °C. Eine etwa vorhandene Reversierung läuft auch bei Folientemperaturen von etwa 60 °C prozesssicher.

Eine Kühlwalze kann schon dann als eine Kühlwalze aufgefasst werden, wenn sie keine aktiven Heizmittel aufweist. Bevorzugt jedoch weist sie ein aktives Kühlmittel auf.

Insbesondere kann eine Kühl walze über ein ausdrückliches Wärmeabführmittel verfügen, beispielsweise über einen Wasserkreislauf oder einen anderen Fluidkreislauf für ein Kühlmittel, welcher mittels einer Leitung in die Kühlwalze hinein und aus der Kühlwalze wieder heraus geführt wird.

In einer bevorzugten Ausführungsform sind ein Wärmetauscher, eine elektrisch angetriebene Fluidpumpe und/oder eine Kältepumpe in den Kreislauf integriert und an die Kühlwalze angeschlossen.

Die Behandlungswalzenstrecke kann vorteilhaft eine Regelung für eine Planlageverbesserung aufweisen, wobei ein Längsdehnen der Doppellagenfolienbahn um 0,5 % bis 5 % durchgeführt wird.

Alternativ kann die Behandlungswalzenstrecke eine Regelung für eine Verreckung aufweisen, und zwar mit einem Längsrecken der Doppellagenfolienbahn um mehr als 5 %, bevorzugt um mehr als 100 %, oder um mehr als 500 %. Vorstehend wurden bereits Daten zu einer möglichen Konfiguration für eine Verreckung, also als MDO, angegeben, mit einem Reckverhältnis innerhalb des Streckabschnitts von idealerweise von 1:2 bis 1:10, und/oder mit einem Reckverhältnis von der Haltewalze bis zur Kühlwalze von idealerweise 1:2 bis 1:4.

Vorstehend wurden bereits mögliche Temperatursprünge zwischen den Ablauftemperaturen der Doppellagenfolienbahn von den Walzen oder anders gebildeten Stationen innerhalb der Behandlungswalzenstrecke erläutert.

Unabhängig von den vorstehend genannten weiteren Randbedingungen wird vorgeschlagen, dass die Behandlungswalzenstrecke eine Heizwalze für die Doppellagenfolienbahn mit einer Temperaturstufe von plus/minus 0 K oder von plus 1 K bis plus 80 K oder mehr im Falle schnelllaufender Doppellagenfolienbahnen, insbesondere Polypropylen, aufweist, insbesondere verglichen mit der in Maschinenrichtung vorherigen Station und/oder der Walzentemperatur der Abzugswalze.

Alternativ und kumulativ wird vorgeschlagen, dass die Behandlungswalzenstrecke eine Streckwalze für die Doppellagenfolienbahn mit einer Temperaturstufe von minus 10 K, bevorzugt von plus 5 K, bis plus 30 K aufweist, oder von plus 50 K oder mehr im Falle schnelllaufender Doppelllagenfolienbahnen, verglichen mit der in Maschinenrichtung vorherigen Station.

Alternativ und kumulativ wird vorgeschlagen, dass die Behandlungswalzenstrecke eine Temperwalze für die Doppellagenfolienbahn mit einer Temperaturstufe von minus 10 K, bevorzugt von plus 5 K, bis plus 30 K aufweist, oder von plus 50 K oder mehr im Falle schnelllaufender Doppellagenfolienbahnen, verglichen mit der in Maschinenrichtung vorherigen Station.

Alternativ oder kumulativ wird vorgeschlagen, dass die Behandlungswalzenstrecke eine Kühlwalze für die Doppellagenfolienbahn mit einer Temperaturstufe von minus 10 K bis minus 80 K, oder minus 100 K im Falle schnelllaufender Doppellagenfolienbahnen, aufweist, verglichen mit der in Maschinenrichtung vorherigen Station.

Um die Gesamtanlage möglichst flach bauen zu lassen, insbesondere wenn eine Reversiereinheit oberhalb angeordnet ist, wird vorgeschlagen, dass die Behandlungswalzenstrecke zwei quer ausgerichtete Teilabschnitte im Verlauf der Doppellagenfolienbahn aufweist, bevorzugt drei quer ausgerichtete Teilabschnitte, insbesondere jeweils eine vertikale Steigrichtung über dem Abzugswalzenpaar überspannend.

Zu einer "quer" angeordneten Ausrichtung wurde vorstehend bereits erläutert, dass diese schon dann vorhanden sein soll, wenn bei einer Blickrichtung von der Seite der Walzen, also parallel zu der Drehachsenausrichtung der Walzen, die direkte Verbindung zwischen zwei aufeinanderfolgenden Walzen eher horizontal als vertikal liegt, also maximal 45° gegenüber der Horizontalen beträgt, bevorzugt maximal 30°, besonders bevorzugt maximal 15°, 10° oder 5°.

Maßgebend für die Bauhöhe ist weniger der Lauf der Folie als vielmehr die Anordnung der einzelnen Walzen. Die Folie kann abhängig von der vorgegebenen Anordnung der Walzen auf der einen oder anderen Seite herum zu verlaufen ausgelegt werden, nimmt aufgrund ihrer praktisch vernachlässigbaren Dicke allerdings keine echte Bauhöhe in Anspruch.

Dabei kann es sogar von Vorteil sein, wenn die Folie in den quer angeordneten Teilabschnitten weniger horizontal liegt als die Verbindung zwischen den beiden Achsenwalzen.

Das vorstehend geschilderte Merkmal, dass ein Teilabschnitt eine vertikale Steigrichtung über dem Abzugswalzenpaar überspannt, ist so zu verstehen, dass der zwischen den beiden aufeinanderfolgenden Walzen vorgesehene Folienlaufweg diejenige virtuelle, vertikal angeordnete Ebene durchkreuzt, welche sich oberhalb des Nips des Abzusgwalzenpaares befindet.

Bei einer solchen Gestaltung sind also Walzen auf beiden Seiten der vertikal nach oben steigenden Ebene über dem Abzugswalzenpaar angeordnet, wobei die Folie seitenübergreifend läuft, bevorzugt hin- und herläuft, sodass eine recht lange Folienlaufstrecke für die Behandlungswalzenstrecke erreicht wird, gleichzeitig aber die Bauhöhe niedrig gehalten wird.

Eine bevorzugte Ausführungsform der Erfindung sieht vor, dass die Behandlungswalzenstrecke drei gleich quer ausgerichtete Teilabschnitte aufweist, insbesondere nur einmal eine vertikale Steigrichtung über dem Abzugswalzenpaar überspannend.

Bei einer solchen Ausgestaltung sind beispielsweise vier Walzen zumindest im Wesentlichen in einer Linie angeordnet, und zwar in einer quer zur Aufstiegsrichtung liegenden Linie, bevorzugt nahezu oder exakt horizontal.

Zum Einfädeln kann die Behandlungswalzenstrecke eine Einfädelhilfe mit einer verschieb- oder verschwenkbaren Walze aufweisen. Dies wurde bereits erläutert. Die Einkämmtiefe ist bevorzugt auf gewünschte Maße einstellbar, also idealerweise elektronisch über eine Anlagensteuerung eingebbar.

Es sei ausdrücklich darauf hingewiesen, dass kumulativ zum Längsstrecken der Doppellagenfolienbahn auch Querstreckmittel vorgesehen sein können, beispielsweise mit divergierend angeordneten Führungsbahnen, in welchen singuläre Greifmittel wie Kluppen oder Nadeln geführt sind, welche letztendlich die Folienbahn quer zur Maschinenrichtung ziehen.

Nach einem dritten Aspekt der Erfindung löst die gestellte Aufgabe ein Verfahren zum Herstellen einer Blasfolienbahn in einer Blasfolienanlage, vor allem in einer Blasfolienanlage wie vorstehend beschrieben, mit den Schritten
- Extrudieren eines Folienschlauchs;
- Aufblasen des Folienschlauchs auf einer Schlauchbildungszone zum Querziehen des Folienschlauchs;
- Kühlen des aufsteigenden Folienschlauchs mit einem Kühlmittel;
- Flachlegen des Folienschlauchs zu einer Doppellagenfolienbahn mit einer Flachlegung;
- Abziehen der Doppellagenfolienbahn mit einem Abzugswalzenpaar unter Längsziehen des Folienschlauchs;
   wobei sich das Verfahren kennzeichnet durch die weiteren Schritte
- Führen der Doppellagenfolienbahn oberhalb des Abzugswalzenpaares weiter nach oben und durch eine Behandlungswalzenstrecke mit einem Heizmittel, um die Doppellagenfolienbahn zu erwärmen;
- Behandeln der Doppellagenfolienbahn in der Behandlungswalzenstrecke, insbesondere Strecken der Doppellagenfolienbahn in einem Streckabschnitt der Behandlungswalzenstrecke, und
- oberhalb der Behandlungswalzenstrecke Reversieren des Folienschlauchs in Form der Doppellagenfolienbahn mittels einer Reversiereinrichtung.

Optional kann das Verfahren um folgende Merkmale ergänzt werden:
- Führen der Doppellagenfolienbahn innerhalb der Behandlungswalzenstrecke um eine erste Streckwalze und um eine der ersten Streckwalze folgende zweite Streck-walze,
- wobei das Abzugswalzenpaar mit einer Abzugswalzengeschwindigkeit angetrie-ben wird, und wobei die zweite Streckwalze mit einer Streckgeschwindigkeit angetrieben wird, welche höher liegt als die Abzugswalzengeschwindigkeit und als die Geschwindigkeit der ersten Streckwalze, sodass im Betrieb der Blasfolienanlage (1) die Doppellagenfolienbahn zwischen der ersten und der zweiten Streckwalze in Maschinenrichtung gestreckt wird,
- wobei innerhalb der Behandlungswalzenstrecke vor und/oder an der ersten Streckwalze eine ein Durchschlagen von Zugkraft von der zweiten Streckwalze auf das Abzugswalzenpaar hemmende Durchschlagbremse vorgesehen ist, sodass die Durchschlagbremse ein Lager zur Aufnahme der Zugkraft darstellt.

Vorstehend wurde bereits erläutert, dass diese Behandlungsschritte von großem Vorteil sind. Dadurch, dass die Folie in Gestalt der Doppellagenfolienbahn oberhalb der Abzugswalzen weiter nach oben geführt wird, wird auf eine lange Bahnführung verzichtet, welche ein energieverzehrendes weiteres Abkühlen der Folie nach dem Abzugswalzenpaar vermeidet.

Die Folie kann somit aus erster Wärme mit nur wenig Zusatzenergie auf ein besser zu verarbeitendes Temperaturniveau gebracht werden und dann beispielsweise verstreckt, insbesondere gedehnt oder gereckt, oder anderweitig behandelt werden, beispielsweise kann die Oberfläche eine Behandlung erfahren und/oder die Folie kann geprägt werden, und/oder es können Bauteile angeheftet oder eingelegt werden, wie beispielsweise aktive oder passive Schwingungskreise, oft als RFID-Chips bezeichnet, und/oder die Folie kann bestrahlt werden und/oder die Folie kann laminiert werden und/oder es kann eine Koronabehandlung der Oberfläche durchgeführt werden und/oder die Folie kann geprägt werden und/oder es kann ein Klebstoff aufgebracht werden und/oder es kann ein Gleitmittel aufgebracht werden und/oder es kann eine Anti-Beschlag-Beschichtung aufgebracht werden und/oder es kann ein gezieltes Tempern der Doppellagenfolienbahn zum Unterstützen der Migration von Zuschlagstoffen durchgeführt werden, wenn Zuschlagstoffe an die Folienoberfläche wandern sollen, um dort zu wirken, sodass eine nachgeschaltete Temperierung oder eine Lagerung entfallen können, wobei die Migration im Wesentlichen eine Funktion der Temperatur ist.

Und/oder es kann eine gezielte Beeinflussung von Schrumpfwerten der Folie vorgenommen werden. Durch ausreichend langes Tempern kann der Schrumpf nach dem Strecken reduziert werden, bis hin zum Erzeugen einer sogenannten "toten Folie" ohne Schrumpf. Alternativ kann eine Steigerung von Schrumpfwerten erreicht werden, insbesondere der Schrumpfwerte in Maschinenrichtung, durch gezieltes "Einfrieren" von Spannungen.

Und/oder es wird ein gezieltes Einstellen der Rollneigung bis hin zum Vermeiden von Rollneigung bei asymmetrischen Folienstrukturen vorgenommen.

Für die vorstehenden Anwendungen können das hier beschriebene Verfahren und die hier beschriebene Blasfolienanlage vorteilhaft gezielt eingesetzt werden.

Zum Einfädeln der Doppellagenfolienbahn beim Anfahren der Blasfolienanlage können eine oder mehrere Walzen der Behandlungswalzenstrecke von ihrer Arbeitsposition verfahren oder verschwenkt werden und die Doppellagenfolienbahn nach dem Einfädeln mittels eines Rückverfahrens bzw. Rückverschwenkens gespannt werden.

Schließlich löst nach einem vierten Aspekt der vorliegenden Erfindung - hier nicht unabhängig beansprucht - die gestellte Aufgabe eine Folie, hergestellt mit einer Blasfolienanlage und/oder mittels eines Verfahrens wie vorstehend beschrieben.

Sowohl die Anlage als auch das Verfahren wirken sich spürbar und nachvollziehbar auf die fertige Folie aus: denn es führt zu einer besonders homogen biaxial verstreckten Folie, wenn die Moleküle aus erster Wärme sogleich nochmals nacherwärmt und dann verstreckt werden, anstatt sie zunächst abkühlen zu lassen.

Wenn die Folie also erst einmal abgekühlt ist, muss sie naturgemäß - um die Blasfolienanlage wirtschaftlich arbeiten lassen zu können - recht schnell in den gewünschten hohen Temperaturbereich hinein erwärmt werden, was zu den beschriebenen nicht gleichmäßig vorhersehbaren Folieneigenschaften führen wird.

Die Qualität des mit dem vorgeschlagenen Verfahren hergestellten Folienprodukts ist daher auch an der Folie nachweisbar vorteilhaft, sofern die Parameter bei der Blasfolienherstellung nach der hier vorliegenden Erfindung geeignet eingestellt werden.

Die Erfindung wird nachstehend anhand sechser Ausführungsbeispiele unter Bezugnahme auf die Zeichnung näher erläutert. Dort zeigen
- Figur 1: schematisch in einer vertikalen Schnittebene senkrecht zu einem Abzugswalzenpaar eine erste Variante einer Behandlungswalzenstrecke mit fünf Walzen und einer darüber angeordneten Reversiereinrichtung,
- Figur 2: in einer ansonsten gegenüber Figur 1 unveränderten Ansicht eine zweite Variante einer Behandlungswalzenstrecke mit fünf Walzen und einer darüber angeordneten Reversiereinheit,
- Figur 3: in einer ansonsten gegenüber Figur 1 unveränderten Ansicht eine dritte Variante einer Behandlungswalzenstrecke mit fünf Walzen und einer darüber angeordneten Reversiereinheit,
- Figur 4: schematisch in einer senkrechten Schnittebene durch ein Abzugswalzenpaar eine vierte Variante einer Behandlungswalzenstrecke mit fünf Walzen und einer darüber angeordneten Reversiereinrichtung, bei geringerer Bauhöhe, insbesondere als Ausführung für eine MDO-Einheit,

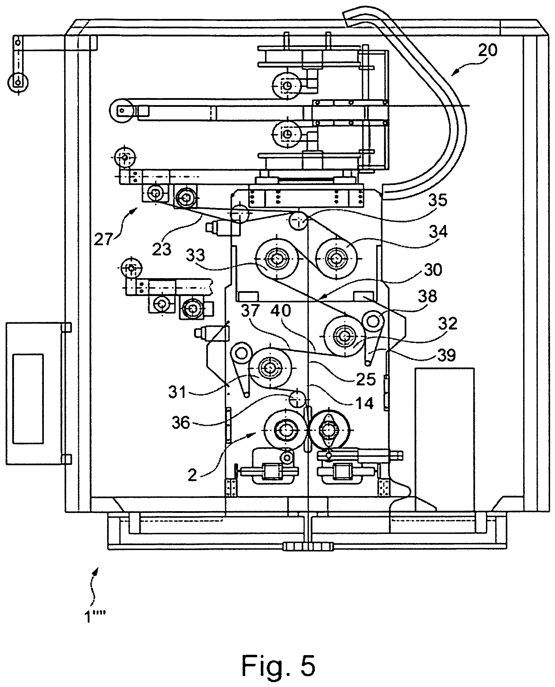

- Figur 5: schematisch in einer vertikalen Schnittebene durch ein Abzugswalzenpaar eine fünfte Variante einer Behandlungswalzenstrecke mit vier Walzen und einer darüber angeordneten Reversiereinheit, insbesondere als Ausführung für ein Planlagepaket, und
- Figur 6: stark schematisch eine mögliche sechste Variante für eine Behandlungswalzenstrecke mit möglichst geringer Bauhöhe,
- Figur 7: ein Diagramm zur Entwicklung der Längszugspannung σ über einer Längsdehnung ε einer Kunststofffolie,
- Figur 8: schematisch in einer vertikalen Schnittebene durch eine Abzugswalzenpaar eine sechste Variante einer Behandlungswalzenstrecke mit fünf Walzen und einer darüber angeordneten Reversiereinheit sowie
- Figur 9: schematisch in einer vertikalen Schnittebene durch eine Abzugswalzenpaar eine siebte Variante einer Behandlungswalzenstrecke mit sechs Walzen für vier Behandlungsstationen und mit einer darüber angeordneten Reversiereinheit.

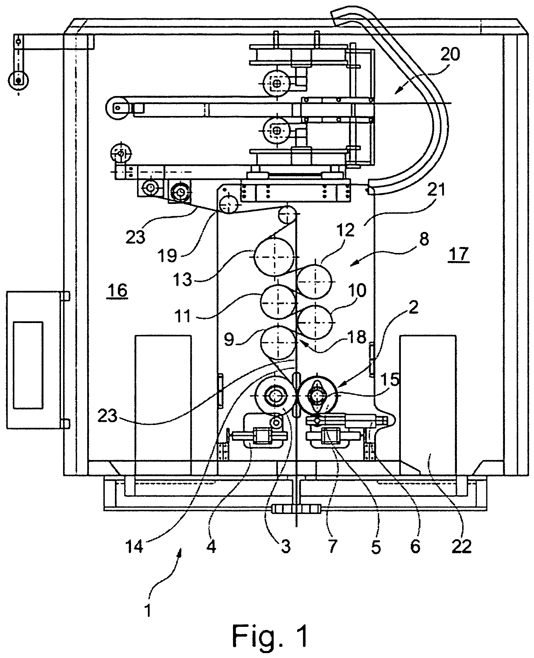

Die Blasfolienanlage 1 (nur im oberen Bereich dargestellt) in Figur 1 besteht im Wesentlichen aus einem Extruder, einem Blaskopf mit einer Ringschlitzdüse, einer darüber angeordneten Steigstrecke für einen extrudierten Folienschlauch, einem Kalibrierkorb, einer Flachlegung und einem Abzugswalzenpaar 2 oberhalb der Flachlegung, wobei eine erste Abzugswalze 3 in ihrer Position feinjustierbar von einem ersten Halter 4 getragen wird, während eine zweite Abzugswalze 5 von einem Verstellzylinder 6 horizontal verschieblich auf einem Gleitlagerhalter 7 gelagert ist. Der Verstellzylinder 6 kann die zweite Abzugswalze 5 somit horizontal zur ersten Abzugswalze 3 hin und von dieser fort bewegen.

Oberhalb des Abzugswalzenpaares 2 ist eine Behandlungswalzenstrecke 8 vorgesehen. Dort befinden sich insgesamt fünf Walzen, nämlich eine erste Walze 9, eine zweite Walze 10, eine dritte Walze 11, eine vierte Walze 12 und eine fünfte Walze 13.

Die fünf Walzen der Behandlungswalzenstrecke 8 sind abwechselnd auf unterschiedlichen Seiten einer virtuellen Ebene 14 angeordnet, welche parallel zu Mittelachsen 15 (exemplarisch gekennzeichnet) der beiden Abzugswalzen liegt und vertikal durch den Nip zwischen den beiden Abzugswalzen hindurch verläuft. Die virtuelle Ebene beinhaltet die Fläche, die die flachgelegte Folie durchstreichen würde, wenn die flachgelegte Folie aus dem Nip der Abzugswalzen kommend einfach vertikal nach oben aufsteigen würde. Im vertikalen Schnitt senkrecht zu den Mittelachsen 15 stellt sich die virtuelle Ebene 14 daher als eine vertikal verlaufende Linie dar, nämlich der vertikalen Steigrichtung der Folie folgend und beginnend am Nip des Abzugswalzenpaares.

Die erste Walze 9, die dritte Walze 11 und die fünfte Walze 13 liegen auf einer ersten Seite 16 der virtuellen Ebene 14; die zweite Walze 10 und die vierte Walze 12 hingegen liegen auf einer gegenüberliegenden zweiten Seite 17 der virtuellen Ebene 14.

Gleichzeitig sind alle fünf Walzen der Behandlungswalzenstrecke 8 so eng in der Vertikalen aneinander gesetzt, dass sich bei einer horizontalen Projektion der Walzen auf die virtuelle Ebene 14 jeweils eine Überlappung der ersten Walze 9 mit der zweiten Walze 10, der zweiten Walze 10 mit der dritten Walze 11, der dritten Walze 11 mit der vierten Walze 12 und der vierten Walze 12 mit der fünften Walze 13 ergibt, und zwar jeweils zu ungefähr einem Drittel der gesamten Durchmessergröße der fünf Walzen.

Die ersten vier Walzen 9, 10, 11, 12 der Behandlungswalzenstrecke 8 sind gleich groß ausgeführt, während die beiden Abzugswalzen 3, 5 des Abzugswalzenpaars 2 und die fünfte Walze 13 größer ausgeführt sind.

Abstände 18 (exemplarisch gekennzeichnet) der fünf Walzen der Behandlungswalzenstrecke 8 untereinander betragen jeweils mindestens 50 mm.

Die erste Walze 9 ist mit einer Geschwindigkeitsregelung versehen, sodass ihre Oberflächengeschwindigkeit bei einer Rotation recht genau auf ein vorgegebenes Maß eingeregelt werden kann.

Die zweite Walze 10 ist mit einem Antrieb und einer Regelung versehen, welche die zweite Walze 10 auf deutlich höhere Umfangsgeschwindigkeit einregeln können als die erste Walze 9.

Die dritte und vierte Walze 11, 12 können antreibbar sein, dann beispielsweise in einer selben Geschwindigkeit wie die zweite Walze 10 oder bevorzugt langsamer als die zweite Walze 10.

Die fünfte Walze 13 kann ebenfalls antreibbar sein, beispielsweise zumindest im Wesentlichen mit derselben Geschwindigkeit wie die vierte Walze 12 oder bevorzugt langsamer als die vierte Walze 12.

Es sei angemerkt, dass es von Vorteil sein kann, nach einem Verstrecken langsamer zu werden, um Spannungen in der Folie abbauen zu lassen.

Die erste Walze 9 ist außerdem mit einem aktiven Heizmittel und einem Temperatursensor ausgestattet (beide nicht dargestellt), nämlich einer Rohrführung für ein Heizfluid mit einer wärmeleitenden Verbindung zur Oberfläche der ersten Walze 9, während der Temperatursensor entweder über eine berührungslose Messung die Oberflächentemperatur der ersten Walze 9 und/oder der ablaufenden Doppellagenfolienbahn erfassen kann.

Bevorzugt ist der Temperatursensor in einem Rücklauf des Heizfluids angeordnet, sodass unter Inkaufnahme einer gewissen Ungenauigkeit davon ausgegangen werden kann, dass die Folie etwas kühler ablaufen wird als die Rücklauftemperatur des Heizfluids beträgt.

Idealerweise nimmt die Ablauftemperatur einer Doppellagenfolienbahn exakt die Temperatur der Walzenoberfläche an. In der Praxis hingegen wird die ablaufenden Folie meist ein wenig wärmer oder kühler sein, je nachdem ob sie von der Walze gekühlt oder erwärmt wurde.

Der Fachmann kann zum Ausführen in einer besonders präzisen Ausführungsform die Ablauftemperaturen der Folie von den einzelnen Walzen messen, beispielsweise berührungslos per Infrarotsensor, und anhand der tatsächlichen Folientemperaturen die Walzentemperaturen nachstellen.

Die zweite Walze 10, die dritte Walze 11 und die vierte Walze 12 können unabhängig voneinander jeweils ebenfalls mit einem solchen aktiven Heizmittel ausgestattet sein.

Jedenfalls ist eine Walze, hier die fünfte Walze 13, mit einer Temperaturmessung und einem aktiven Kühlmittel ausgestattet.

Oberhalb der Behandlungswalzenstrecke 8 sind zwei nicht-angetriebene Umlenkwalzen 19 (exemplarisch gekennzeichnet) auf dem Weg zu einer oberhalb des Abzugswalzenpaars 2 und der Behandlungswalzenstrecke 8 angeordneten Reversiereinheit 20 angeordnet, wobei die Umlenkwalzen 19 und die Reversiereinheit 20 aus dem Stand der Technik hinreichend bekannt sind und daher hier nicht weiter erläutert werden sollen.

Sowohl die beiden Abzugswalzen 3, 5 des Abzugswalzenpaars 2 als auch die fünf Behandlungswalzen der Behandlungswalzenstrecke 8 wie schließlich auch die Umlenkwalzen 19 sind an ihren Stirnseiten an einem Maschinengestell 21 gelagert.

Seitlich des Maschinengestells 21 sind zwei Temperiergeräte 22 (exemplarisch gekennzeichnet) vorgesehen. Mit den Temperiergeräten 22 sind die temperierten Walzen der Behandlungswalzenstrecke 8 über Kühlmittelleitungen bzw. Wärmemittelleitungen bevorzugt ebenfalls über Temperatursensordatenleitungen (nicht dargestellt) verbunden. In den Temperiergeräten 22 enthalten oder jedenfalls im Zugriff auf die Temperiergeräte 22 sind elektronische Microcontroller (nicht dargestellt) vorgesehen, welche die eingestellte Regelung der Temperatur der temperierten Walzen anhand des Fluidrücklaufs vornehmen können.

Im Betrieb der Blasfolienanlage 1 wird ein Folienschlauch (nicht dargestellt) vom Extruder (nicht dargestellt) durch die Ringschlitzdüse (nicht dargestellt) extrudiert. Der Folienschlauch wird die Blasfolienanlage 1 entlang nach oben gezogen, durch den Kalibrierkorb (nicht dargestellt) und die Flachlegung (nicht dargestellt). Am Ende der Flachlegung ist der Folienschlauch weitgehend flachgelegt und läuft in dieser Form in das Abzugswalzenpaar 2 ein. Von dort an sei von einer Doppellagenfolienbahn 23 gesprochen.

Die Doppellagenfolienbahn 23 kann wahlweise in einer geraden Aufstiegsrichtung oberhalb des Abzugswalzenpaars 2, deckungsgleich mit der virtuellen Ebene 14, zwischen den Walzen 9, 10, 11, 12, 13 der Behandlungswalzenstrecke 8 hindurch geführt werden und sogleich auf die Umlenkwalzen 19 und von dort aus zur Reversiereinheit 20 geführt werden.

In diesem Fall entspricht die Blasfolienanlage 1 einer herkömmlichen Blasfolienanlage. Die Reversiereinheit dreht sich im Betrieb der Blasfolienanlage 1 und erzeugt so auf einer Rolle (nicht dargestellt) am Boden der Aufstellfläche (nicht dargestellt) ein möglichst gleichmäßig aufzuwickelndes Folienwickel.

In einer alternativen - und hier bevorzugten - Folienführungsbahn hingegen läuft die Doppellagenfolienbahn 23 um die fünf Walzen 9, 10, 11, 12, 13 der Behandlungswalzenstrecke 8 jeweils herum, wobei sich aufgrund der Geometrie der Walzen zueinander jedenfalls auf der zweiten Walze 10, der dritten Walze 11 und der vierten Walze 12 ein Umschlingungswinkel von mehr als 180° ergibt. Der Umschlingungswinkel der ersten Walze 9 richtet sich insbesondere nach der Positionierungshöhe de ersten Walze 9 gegenüber dem Abzugswalzenpaar 2, sowie nach den Durchmessern der drei Walzen und außerdem nach dem Abstand der ersten Walze 9 zur virtuellen Ebene 14. In der hier gewählten Anordnung beträgt der Umschlingungswinkel an der ersten Walze 9 ungefähr 170°.

Gleiches gilt für die fünfte Walze 13, wobei hier insbesondere die Positionierung zur virtuellen Ebene 14, zur ersten Umlenkwalze 19 und der Durchmesser zwischen der fünften Walze 13 und der ersten Umlenkwalze 19 relevant sind.

In der beschriebenen Konfiguration läuft die Doppellagenfolienbahn 23 dann in Extrusionsrichtung, also in Maschinenrichtung, nach oben durch das Abzugswalzenpaar 2 hindurch und wird von dort zunächst im Uhrzeigersinn (alle Angaben zur Uhrzeigersinn bzw. Gegenuhrzeigersinn beziehen sich auf die Schnittebenenbetrachtung der Figuren) um die erste Walze 9 herumgeführt. Die erste Walze 9 dient als Haltewalze. Gleichzeitig wird die erste Walze 9 von einem ersten von insgesamt drei Wärm- bzw. Kühlmittelkreisläufen innerhalb der Behandlungswalzenstrecke 8 durchströmt, nämlich einem Heizkreislauf.

Bei einer Konfiguration der ersten Variante der Blasfolienanlage 1 in Figur 1 kann die Doppellagenfolienbahn 23 beispielsweise mit einer Folieneinlauftemperatur von etwa 60 °C bis etwa 80 °C vom Abzugswalzenpaar 2 kommen.

Die erste Walze 9 ist so eingeregelt, dass ihre Umfangsgeschwindigkeit dieselbe beträgt wie die Doppellagenfolienbahn 23 auch im Abzugswalzenpaar 2 erfährt. Im Abstand zwischen dem Abzugswalzenpaar 2 und der ersten Walze 9 erfährt die Doppellagenfolienbahn 23 daher keine mechanische Beeinflussung.

Wegen des hohen Umschlingungswinkels der Doppellagenfolienbahn 23 um die erste Walze 9 herum läuft die Doppellagenfolienbahn 23 auf der ersten Walze 9 mit Haftreibung, somit exakt mit derselben Geschwindigkeit wie die Walzenoberfläche vorgibt, auch wenn die Haftreibung nicht über den gesamten Umschlingungswinkel vorliegt.

Der erste Temperaturkreislauf, also der Heizkreislauf, welcher durch die erste Walze 9 in ihrer Funktion als Haltewalze hindurchführt, ist beispielsweise auf eine Temperaturdifferenzgebung in der Folie zwischen plus 5 K und plus 10 K eingestellt, bezogen auf die Folientemperatur beim Auslauf aus der vorangehenden ersten Abzugswalze 3. Die Doppellagenfolienbahn 23 wird somit beim Umlaufen der ersten Walze 9 etwa um 5 K bis 10 K erwärmt. Bereits diese geringe Temperaturdifferenz reicht aus, um die Verarbeitbarkeit der Doppellagenfolienbahn 23 signifikant zu erhöhen, denn die Blasfolienanlage 1 ist (unterhalb des dargestellten Bereichs aus Figur 1) so eingestellt, dass die Folie erst im Laufe des Aufsteigens abkühlt und somit beim Durchlaufen der beiden Abzugswalzen 3, 5 ohnehin noch eine Temperatur hat, welche recht hoch liegt, im getesteten Beispiel zwischen 60 °C und 80 °C.

Mit nur sehr wenig Energie, die vom Temperiergerät 22 zur Verfügung gestellt werden muss, kann die Folie somit aus erster Wärme schnell wieder auf ein sehr gut verarbeitbares Temperaturniveau gebracht werden, um ein Längsverrecken zu erleichtern.

Die zweite Walze 10 ist im dargestellten Ausführungsbeispiel als eine Reckwalze ausgebildet. Sie ist bei den positiven Versuchen mit der dreifachen bis vierfachen Umfangsgeschwindigkeit im Verhältnis zur ersten Walze 9 angetrieben worden. Bei Reckverhältnissen, welche eher zu 1:3 gingen, ergab sich eine Folienqualität, welche eher für Silage-Prestretch geeignet erschien; bei einer höheren Reckverhältniszahl hingegen, also eher in Richtung 1:4 gehend oder darüber hinaus, ergab sich eine breitere Verarbeitbarkeit, insbesondere hinsichtlich der optischen Folienqualitäten.

Die zweite Walze 10, also die Reckwalze, wurde bei den positiven Versuchen als erste von insgesamt drei Walzen eines zweiten Temperaturkreislaufs vorgesehen, nämlich eines Temperkreislaufs. Der Temperkreislauf durchströmt die zweite Walze 10, die dritte Walze 11 und die vierte Walze 12. Die Temperatur im Rücklauf des Temperkreislaufs wurde auf plus 5 K bis plus 20 K gegenüber dem Rücklauf der vorausgehenden ersten Walze 9 eingestellt, also der Haltewalze.

Somit trägt die zweite Walze 10 gleich zwei Funktionen: Sie ist einerseits Reckwalze, andererseits Temperstation in Form einer Temperwalze.

Die dritte Walze 11 und die vierte Walze 12 sind als Temperwalzen ausgebildet, halten also das recht hohe Temperaturniveau der Reckwalze jedenfalls im Wesentlichen und führen dadurch zu einer Entspannung der gedehnten Doppellagenfolienbahn 23, was einen Memoryeffekt des ansonsten erfolgenden Rückschrumpfens zu minimieren half.

Die fünfte Walze 13, ausgestaltet als Kühlwalze, ist an den dritten der drei Temperaturkreisläufe angeschlossen, nämlich einen Kühlkreislauf. Das Temperaturniveau im Rücklauf des Kühlkreislaufs betrug idealerweise zwischen minus 10 K und minus 20 K gegenüber dem Rücklauf der vorausgehenden Walze, also der letzten Temperwalze.

Auf allen fünf Walzen der Behandlungswalzenstrecke 8 läuft die Doppellagenfolienbahn 23 überwiegend mit Haftreibung um. Idealerweise sind die fünf Walzen daher oberflächenbeschichtet, insbesondere sei an eine Spiralmutung oder eine Silikonbeschichtung gedacht.

Es versteht sich, dass zu jeder Walze mindestens eine Anlegewalze oder Andrückwalze vorgesehen sein kann. Bei den Prototypenversuchen hat sich aber bereits ein Fahren ohne Anlegewalzen als durchaus ausreichend herausgestellt.

Als Wärm- und Kühlmedium für die Temperiergeräte 22 und die drei Temperierkreisläufe hat sich Wasser bewährt.

Im Auslauf wurde die Blasfolienanlage 1 mit einer Foliengeschwindigkeit zwischen 94 m/min und 340 m/min gefahren, und mit einem Reckverhältnis zwischen der ersten Walze 9 und der fünften Walze 13 zwischen 1:2 und 1:3, wobei wiederum das niedrigere Reckverhältnis, also eher zu 1:2 gehend, eher für Silage-Prestretch-Produkte geeignet erschien.

In Verwirklichung der verschiedenen Erfindungsaspekte stellt die Blasfolienanlage 1 oberhalb des Abzugswalzenpaars 2 eine Behandlungswalzenstrecke 8 mit einem Heizmittel für die Doppellagenfolienbahn 23 bereit, nämlich mit dem aufgeheizten Fluidkreislauf in der ersten Walze 9 und zusätzlich mit dem Temperkreislauf in der zweiten Walze 10, in der dritten Walze 11 und in der vierten Walze 12.

Hier vorliegend sind also sogar mehrere aktive Heizmittel für die Doppellagenfolienbahn 23 vorgesehen, nämlich insgesamt in vier verschiedenen Walzen.

Das Vorsehen eines Heizmittels in mehreren Walzen, mindestens in zwei Walzen, vor allem mit zwei unterschiedlichen Fluidkreisläufen, stellt auch für sich einen Vorteil dar.

In Verwirklichung des zweiten Erfindungsaspekts ist oberhalb des Abzugswalzenpaars 2 jeweils als Teilstrecke eine quer ausgerichtete Behandlungswalzenstrecke vorgesehen, denn von Walze zu Walze innerhalb der Behandlungswalzenstrecke 8 liegen die Walzen zueinander etwa in einem Winkel von 35° bis 40° gegenüber der Horizontalen, sind also eher horizontal als vertikal zueinander ausgerichtet. Dies führt dazu, dass die Walzen wegen ihres ausreichenden seitlichen Versatzes so niedrig bauend angeordnet werden können, dass sie bei einer Projektion die virtuelle Ebene 14 Überschneidungen ergeben, insgesamt also weniger hoch bauen als die Addition der Durchmesser der fünf Walzen betrüge.

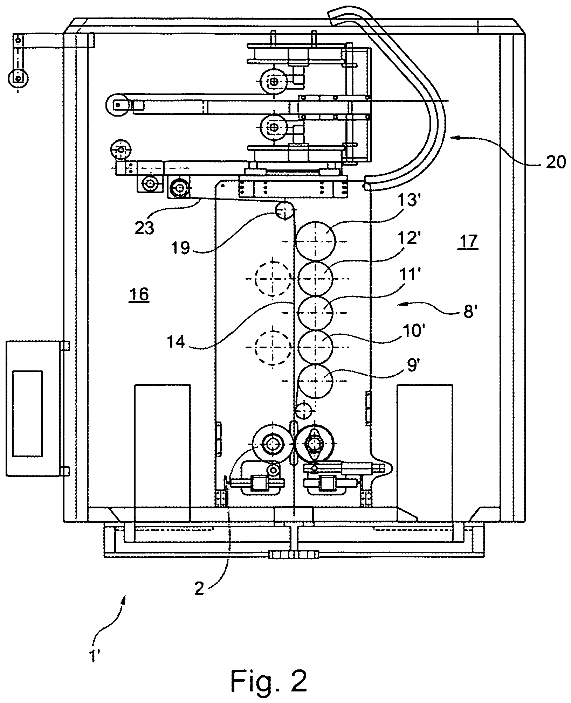

In der zweiten Variante einer Blasfolienanlage 1' in Figur 2 kann die Anlage bis zum Abzugswalzenpaar 2 identisch oder ähnlich ausgeführt sein.

Oberhalb des Abzugswalzenpaars 2 und unterhalb der Reversiereinheit 20 sind abermals fünf Walzen angeordnet, nämlich eine erste Walze 9', eine zweite Walze 10', eine dritte Walze 11', eine vierte Walze 12' und eine fünfte Walze 13', bevor oben anschließend eine Umlenkwalze 19 vorgesehen ist.

Die fünf Walzen erfüllen dieselbe Funktion wie in der ersten Variante aus Figur 1 beschrieben, auch sind dieselben drei Temperierkreisläufe vorhanden.

Die zweite Walze 10' und die vierte Walze 12' sind in der zweiten Variante allerdings auf derselben Seite der virtuellen Ebene 14 angeordnet wie die erste Walze 9', die dritte Walze 11' und die fünfte Walze 13'. Es sind also alle Walzen auf derselben Seite der virtuellen Ebene 14 angeordnet.

Eine direkte Verbindung zwischen dem Nip des Abzugswalzenpaares 2 und der Umlenkwalze 19 ist frei, sodass die Doppellagenfolienbahn 23 wahlweise direkt vertikal nach oben steigend ohne Umlaufen der Walzen in der Behandlungswalzenstrecke 8 nach oben geführt werden kann.

Bevorzugt allerdings ist auch diese Variante als MDO-Anlage eingerichtet, also zum Längsrecken der Folie bis über das plastische Fließen der Doppellagenfolienbahn 23 hinaus.

Die fünf Walzen der Behandlungswalzenstrecke 8 haben einen sehr geringen lichten Abstand, der jedenfalls unter 5 cm liegt. Bei Anfahren der Blasfolienanlage 1' ist es daher nur sehr schwer möglich, in der dargestellten Betriebsposition der Walzen der Behandlungswalzenstrecke 8 die Folie zwischen diesen hindurch einzufädeln, auch wenn die Walzen in jeweils gegenläufigem Drehsinn zu ihrem Vorgänger angetrieben werden.

Zum Einfädeln eines Beginns (nicht dargestellt) der Doppellagenfolienbahn 23 sind daher zwei Walzen, nämlich die zweite Walze 10' und die vierte Walze 12', nach links verfahrbar, also auf die gegenüberliegende Seite der virtuellen Ebene 14. Die Doppellagenfolienbahn 23 kann dann einfach vertikal durch die fünf Walzen hindurch eingefädelt werden, anschließend werden die zweite Walze 10' und die vierte Walze 12' wieder auf dieselbe Seite 17 der virtuellen Ebene 14 gefahren wie die übrigen drei Walzen positioniert sind, und der Extrusionsprozess kann als Steady-State-Prozess gefahren werden.

Bevorzugt kann die zweite Walze 10' wahlweise bis zur gedachten Ebene aus den Achsen der Walzen 9', 11', 13' oder sogar darüber hinaus verstellt werden, sodass sich ein stufenlos einstellbarer Streckabschnitt ergibt. In Vorversuchen hat sich eine Einstellbarkeit der Strecklänge als verfahrenstechnisch günstig gezeigt, beispielsweise weil sich beim Durchfahren durch die gedachte Ebene eine höhere Fehlertoleranz gegenüber Fehlstellen ergab.

In der Einfädelstellung der zweiten Walze 10' und der vierten Walze 12' kann die Blasfolienanlage 1' wie eine konventionelle Blasfolienanlage betrieben werden.

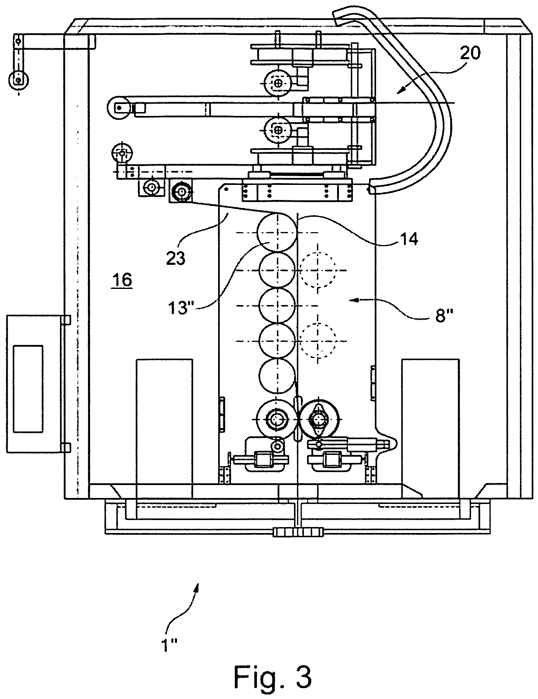

Bei der dritten Variante einer Blasfolienanlage 1" in Figur 3 ist im Wesentlichen derselbe Aufbau wie in der zweiten Variante der Blasfolienanlage 1' in Figur 2 gewählt, allerdings befinden sich die fünf Walzen der Behandlungswalzenstrecke 8" sämtlich auf der ersten Seite 16 der virtuellen Ebene 14. Da sich eine Einlaufseite in die Reversiereinheit 20 ebenfalls auf der ersten Seite 16 der virtuellen Ebene 14 befindet, kann direkt von der fünften Walze 13" zur Reversiereinheit 20 geführt werden. Eine Umlenkwalze 19 ist nicht notwendig.

Die fünfte Walze 13" ist außerdem gegenüber den vier vorausgehenden Walzen so angeordnet, dass ihr zur virtuellen Ebene 14 hin gerichteter Rand über die vorausgehenden vier Walzen hinaus steht, sodass die Doppellagenfolienbahn 23 ohne Einfädeln und ohne Durchlaufen der Behandlungswalzenstrecke 8 um die vier vorausgehenden Walzen herumgeführt werden kann. Der Umschlingungswinkel der Doppellagenfolienbahn 23 um die fünfte Walze 13" herum beträgt dennoch schon ohne Einfädelung fast 90°, im eingefädelten Zustand sogar fast 180°, sodass eine ausreichende Führung gewährleistet ist.

Auch bei der dritten Variante der Blasfolienanlage 1" in Figur 3 ist - wie bei der zweiten Variante der Blasfolienanlage 1' aus Figur 2 - ein Kämmen der zweiten und der vierten Walze vorgesehen, sodass mit einem einfachen geraden Hindurchführen der Folienbeginn beim Anfahren der Anlage eingefädelt werden kann.

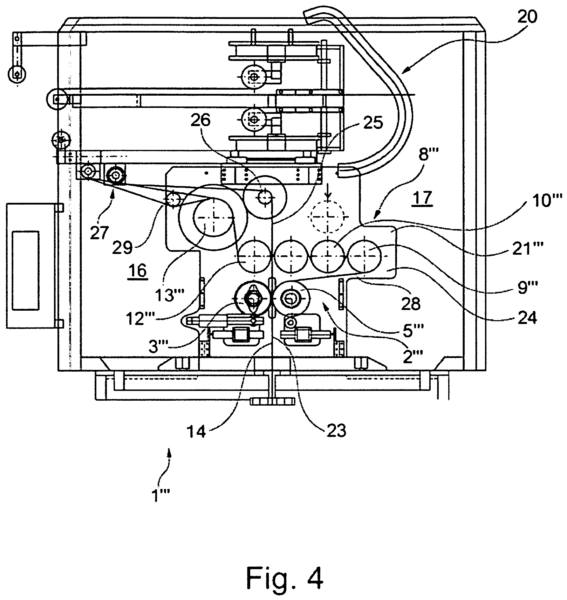

Auch die vierte Ausführungsform der Blasfolienanlage 1'" in Figur 4 ist bis zu einem Abzugswalzenpaar 2'" identisch ausgeführt wie die vorstehend beschriebenen Varianten.

Diejenige erste Abzugswalze 3"', welche auf derselben Seite 16 wie der Einlauf in die Reversiereinheit 20 liegt, ist aber in der vierten Variante der Blasfolienanlage 1'" verschieblich zum Einfädeln und zum Schließen des Abzugswalzenpaars 2'" ausgeführt. Hingegen ist eine zweite Abzugswalze 5"', welche auf einer gegenüberliegenden Seite 17 der virtuellen Ebene 14 liegt, prinzipiell fest ausgestaltet.

Oberhalb des Abzugswalzenpaars 2'" liegen in horizontaler Anordnung nebeneinander vier Walzen einer Behandlungswalzenstrecke 8'", und seitlich sowie in der Höhe dazu versetzt eine fünfte Walze 13"'.

Hinsichtlich der virtuellen Ebene 14 oberhalb des Abzugswalzenpaars 2'" befinden sich somit drei Walzen der Behandlungswalzenstrecke 8'" auf der zweiten, hier rechten, Seite 17, wohingegen sich zwei Walzen der Behandlungswalzenstrecke 8'" auf der ersten, hier also linken, Seite der virtuellen Ebene 14 befinden, also auf derselben Seite wie der Einlauf in die Reversiereinheit 20.

Ein Maschinengestell 21'" für die Walzen der Behandlungswalzenstrecke 8'" weist zu diesem Zweck eine Kragung 24 auf, welche gegenüber einem Hauptkörper des Maschinengestells 21'" seitlich übersteht. An der Kragung 24 ist die erste Walze 9'" gelagert.

Durch die horizontale Anordnung mehrerer Walzen der Behandlungswalzenstrecke 8'" nebeneinander, hier also von insgesamt vier Walzen der Behandlungswalzenstrecke 8'", baut die Blasfolienanlage 1'" insgesamt sehr niedrig, obwohl oberhalb des Abzugswalzenpaars 2'" und der Behandlungswalzenstrecke 8'" noch die Reversiereinheit 20 angeordnet ist.

Zwei der Walzen innerhalb der Behandlungswalzenstrecke 8'", hier die zweite Walze 10'" und die vierte Walze 12'", sind wieder kämmend verschiebbar ausgeführt, sodass das Einfädeln in die Anlage beim Anfahren erleichtert wird. Gerade bei beengten Platzverhältnissen kann allerdings auch ein Verschwenken vorgesehen sein, so kann beispielsweise die zweite Walze 10"' um die erste Walze 9"' herum verschwenkbar ausgeführt sein, gleichzeitig die vierte Walze 12"' beispielsweise um die fünfte Walze 13"' oder um die dritte Walze 11"' herum schwenkbar ausgeführt sein.

In einer geraden Verlängerung oberhalb des Abzugswalzenpaars 2"', also in der virtuellen Ebene 14, ist ein gerader Laufweg 25 für die Doppellagenfolienbahn 23 offen gelassen, sodass die Doppellagenfolienbahn 23 auch ohne Durchlaufen der MDO-Behandlungswalzenstrecke 8"' produziert werden kann. Sie läuft dann gerade nach oben zu einer Geradlaufwegumlenkwalze 26 und von dort weiter in einen Einlauf 27 der Reversiereinheit 20.

Alternativ kann die Doppellagenfolienbahn 23 entlang eines MDO-Laufwegs 28 geführt werden, der direkt in die bezogen auf den Einlauf 27 entgegengesetzte Seite 17 der virtuellen Ebene 14 verschwenkt und um die erste Walze 9'" außen herum verläuft. Dort schließt sich der vorstehend bereits beschriebene Durchlauf durch die weiteren vier Walzen an, welche ebenfalls dieselben Funktionen wie vorstehend bereits beschrieben haben.

Von der fünften Walze 13"' läuft die Doppellagenfolienbahn 23 schließlich entweder über eine weitere Umlenkwalze 29 oder auf direktem Weg, wenn die Umschlingung der fünften Walze 13"' bereits ausreicht, zum Einlauf 27 der Reversiereinheit 20.

Die als Kühlwalze dienende fünfte Walze 13'" und/oder eine etwa vorgesehene weitere Umlenkwalze 29 wie beispielsweise auch weitere Kühleinheiten können miteinander oder gegeneinander verstellbar sein, und zwar einzeln oder gemeinsam, sodass der Abkühlungsweg leicht einstellbar ist. Beispielsweise können die fünfte Walze 13"' und die weitere Umlenkwalze 29 gemeinsam am Maschinengestell gelagert sein, welche sich um eine Achse dreht, die parallel zu der Achse der dargestellten Walzen liegt; oder beispielsweise kann die weitere Umlenkwalze 29 vertikal nach unten verfahrbar oder verschwenkbar sein, sodass sich mit recht einfachen Bewegungen der Umschlingungswinkel der Doppellagenfolienbahn 23 auf dem MDO-Laufweg 28 um die fünfte Walze 13"' herum einstellen und praktisch stufenlos dosieren lässt. Selbst mit einer vorgegebenen Kühltemperatur ist es dann möglich, den Kühlungseffekt vor Einlauf der Doppellagenfolienbahn 23 in die Reversiereinheit 20 einzustellen.

Eine ähnliche Idee lässt sich beispielsweise mit der ersten Walze 9"' durchführen, welche idealerweise als Haltewalze und gleichzeitig als Heizwalze dient. Auch diese lässt sich beispielsweise in der Höhe oder seitlich verstellen, sodass sich durch die geänderte Geometrie des MDO-Laufwegs der Doppellagenfolienbahn 23 ein veränderter Umschlingungswinkel um die erste Walze 9"' und eine geänderte Strecklänge ergeben.

Ein gleicher Effekt kann auch mit einer dort vorgesehenen weiteren Anpresswalze erreicht werden.

In der fünften Variante der Blasfolienanlage 1"" befindet sich wiederum oberhalb eines Abzugswalzenpaars 2 eine Planlage-Strecke 30 und darüber angeordnet eine Reversiereinheit 20 mit einem Einlauf 27.

Innerhalb der Planlege-Strecke 30 sind eine erste Walze 31, eine zweite Walze 31, eine dritte Walze 33 und eine vierte Walze 34 vorgesehen. Von dort aus ist ein designierter Folienlauf über eine Anzahl von passiven Umlenkwalzen 35 (erste exemplarisch gekennzeichnet) zum Einlauf 27 in die Reversiereinheit 20 vorgesehen.

Die vier Walzen der Planlage-Strecke 30 sind wiederum seitlich beabstandet zur virtuellen Ebene 14 vorgesehen, sodass sich ein gerader Laufweg 25 für die Doppellagenfolienbahn 23 vom Abzugswalzenpaar 2 direkt zur ersten passiven Umlenkwalze 35 und von dort weiter zur Reversiereinheit 20 ergibt, wenn die Doppellagenfolienbahn 23 nicht durch das Planlage-System laufen soll.

Als Alternative kann die Doppellagenfolienbahn 23 - hier beispielsweise um eine erste Umlenkung 36 herum - zu der ersten Walze 31 geführt werden, von dort um die Walze 32, von dort um die dritte Walze 33 und schließlich um die vierte Walze 34, bis die Doppellagenfolienbahn 23 auch auf diesem Planlage-Laufweg 37 wieder in den geraden Laufweg 25 einschert.

Jeweils zwei der insgesamt vier Walzen der Planlage-Strecke 30 befinden sich im Wesentlichen auf selber Höhe, sie bilden jeweils ein Paar mit geringer Bauhöhe. Bei einer Projektion auf die virtuelle Ebene 14 ergibt sich ein Überlappungsbereich zwischen der ersten Walze 31 und der zweiten Walze 32 und sogar eine Deckungsgleichheit zwischen der dritten Walze 33 und der vierten Walze 34.

Bereits eine geringfügige Überlappung reicht aber aus, um gegenüber einem Aufbau wie in den Figuren 2 und 3 gezeigt eine geringere Bauhöhe zu erreichen.

Alle vier Walzen der Planlage-Strecke 30 verfügen idealerweise über eine Anpresswalze 38 (exemplarisch gekennzeichnet), welche jeweils gelenkig mit einem Andrückarm 39 (exemplarisch gekennzeichnet) in die jeweilige Walze gedrückt werden.

Im hier vorliegenden Ausführungsbeispiel sind nur an zwei der Walzen Anpresswalzen vorgesehen, nämlich an der ersten Walze 31, welche als Haltewalze und Heizwalze dient, und der zweiten Walze 32, welche als Dehnwalze und Temperwalze dient.

Zwischen der ersten Walze 31 und der zweiten Walze 32 ergibt sich also ein Dehnabschnitt 40, und an den Umfängen der ersten Walze 31 und der zweiten Walze 32 entstehen hohen Tangentialkräfte.

Demgegenüber sind die dritte Walze 33 und die vierte Walze 34, als Kühlwalzen ausgeführt, die Oberflächengeschwindigkeiten in Abstimmung auf diejenige Oberflächengeschwindigkeit der zweiten Walze 32 so eingestellt, dass sich dort keine Dehnungen mehr ergeben, oder sogar langsamer, sodass sich eine Relaxation einstellen kann.

Die beschriebene Ausführungsform ist als Planlage-Paket gedacht, also üblicherweise mit einer maximalen Verstreckung von 1:1,05. Die Strecklänge ist gegenüber den MDO-Varianten recht lang.

Die dadurch resultierende längere Verweilzeit im Streckabschnitt ist für ein breites Prozessfenster von Vorteil.

Weil nur geringe Verstreckungen vorgenommen werden, sind kleine Antriebsleistungen ausreichend. Auch Einzelantriebe sind unnötig, da die Folie nur minimal arbeitete. Es reicht also vollkommen aus, wenn die Haltewalze und die zweite Walze 32 jeweils angetrieben und ihrer Geschwindigkeit regelbar sind.

Da nur ein niedriges Temperatur- und somit Energieniveau erreicht werden muss, ist eine Wasserheizung nach den Prototypenversuchen der Erfinder vollkommen ausreichend.

In der Ausführung des Planlage-Pakets hat bevorzugt die zweite Walze dieselbe Temperatur wie die erste Walze. Die erste Walze dient als Heiz- und Haltewalze. Die zweite Walze dient als Streck- und Temperwalze. Die Strecke zwischen der zweiten und der darauf folgenden dritten Walze ist dann ein Temperabschnitt.

Hingegen ist bei einer MDO-Ausführungsform ohne Weiteres eine Verstreckung von 1:10 oder sogar mehr möglich.

Die Recklänge sollte möglichst kurz sein, um die Querkontraktion, das sogenannte Neck-In, zu reduzieren.

Die Prozessführung ist deutlich kritischer, weil nur eine sehr geringe Verweilzeit in dem sehr kurzen Reckspalt verzeichnet werden kann.

Da mehr Walzen temperiert werden müssen, liegt ein höherer Energieaufwand vor, und eine insgesamt recht lange Temperierstrecke ist notwendig.

Die Antriebe müssen recht stark gehalten sein, um die Streckgrenze des Kunststoffs zu überwinden und den Fließbereich leicht zu überschreiten.

Einzelantriebe werden vorgeschlagen, um eine individuelle Prozessführung zu ermöglichen.

Für eine einfache Planlage-Verbesserung ist eine MDO-Auslegung eigentlich zu groß und somit im Normalfall unwirtschaftlich.

Da bei der MDO hohe Temperaturen erforderlich sind, wird im Normalfall vorgeschlagen, eine Ölheizung zu verwenden.

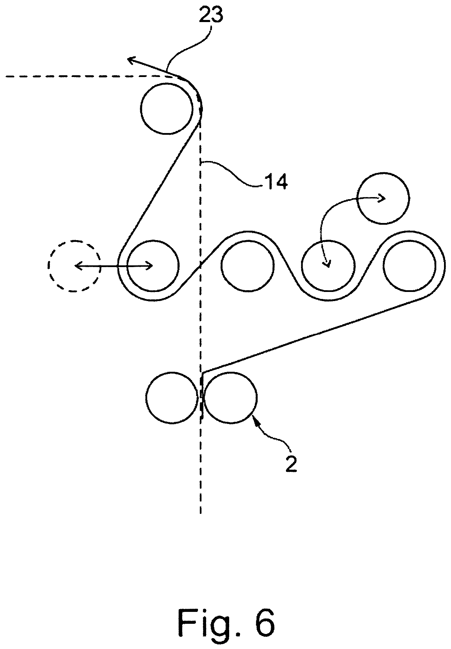

Auch bei der fünften Ausführungsvariante in Figur 6 ist oberhalb des Abzugswalzenpaars eine quer liegende Bearbeitungsstrecke vorgesehen, konkret eine horizontal liegende für vier Walzen, wobei eine Kühlwalze weiter oben angeordnet ist und oberhalb des Abzugswalzenpaars eine gerade Durchführung der Doppellagenfolienbahn ermöglichen würde.

Innerhalb der horizontal liegenden Walzenstrecke sind wiederum zwei Walzen beweglich, nämlich eine zweite Walze verschwenkbar um die erste Walze herum, und eine vierte Walze verschieblich oder verschwenkbar und auf der anderen Seite der virtuellen Ebene 14 angeordnet.

Im Übrigen ist die fünfte Variante auf Figur 6 genau wie die vorstehend beschriebenen Varianten in einer Blasfolienanlage einsetzbar.

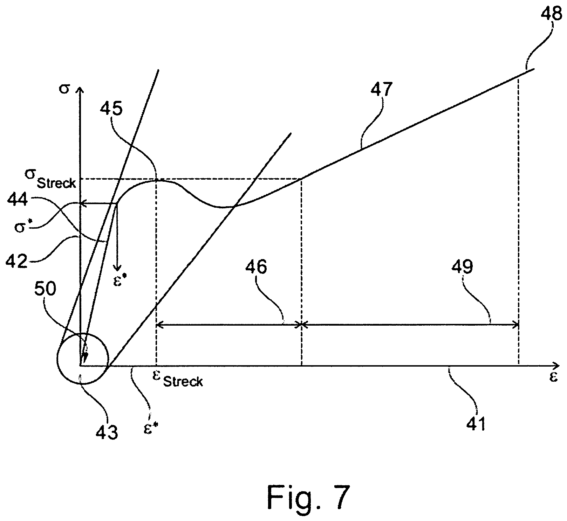

Grundlegend zum Verhalten der hier zu verarbeitenden Folien findet sich eine graphische Erläuterung in dem Diagramm in Figur 7.

Auf einer Abszisse 41 ist dort die Längsdehnung ε der Folie aufgetragen, auf einer Ordinate 42 hingegen die Längsspannung innerhalb der Folie, also eine zur Längszugkraft innerhalb der Folie proportionale Größe. Die Längsspannung wird mit dem Buchstaben σ bezeichnet.

Ausgehend von einem Nullpunkt 43 verhält sich die Folie üblicherweise mit ansteigender Längsdehnung ε in einem linearen Spannungszunahmefeld 44. Ab einer gewissen Längsdehnung ε* bzw. damit einhergehender Spannung ε* verlässt die Folie den Bereich der linearen Spannungszunahme, und die Spannungskurve flacht sich ab, hat also eine geringere Steigung gegenüber der Abszisse 41.

Ab der Längsdehnung ε*+ sind eingebrachte Längsdehnungen irreversibel.

Die Spannung σ nimmt dann ein erstes Maximum 45 an. An diesem Punkt beginnt das sogenannte plastische Fließen der Folie. Die zugehörige Längsdehnung ε^{Streck} wird als Streckgrenze bezeichnet. Ein Fließbereich 46 erstreckt sich vom ersten Maximum 45 der Längsspannung σ, bezeichnet als σ_{Streck}, bis hin zu demjenigen Bereich des dann wieder ansteigenden Astes 47, wo die Längsspannung σ wiederum die Spannung σ_{Streck} erreicht.

Von dort steigt die Längsspannung σ bei zunehmender Längsdehnung ε wieder stetig an, bis es zu einem plötzlichen Versagen in Form eines Folienabrisses 48 kommt.

Vom wieder-Erreichen der Spannung σ_{Streck} bis zum Folienabriss erstreckt sich ein MDO-Arbeitsbereich 49.

Demgegenüber liegt ein Planlagepakt-Arbeitsbereich im Bereich jenseits des linearen Spannungszunahmefeldes 44, jedoch unterhalb der Streckgrenze ε^{Streck}. Im linearen Spannungszunahmefelds 44, also bis zur Längsdehnung ε*, verhält sich die Folie elastisch.

Mit einfachen Worten findet also das Dehnen eines Planlagepakets zwischen ε* und dem lokalen Maximum statt. Hingegen findet das Recken einer MDO ab dem Wiedererreichen von σ^{Streck}, statt.

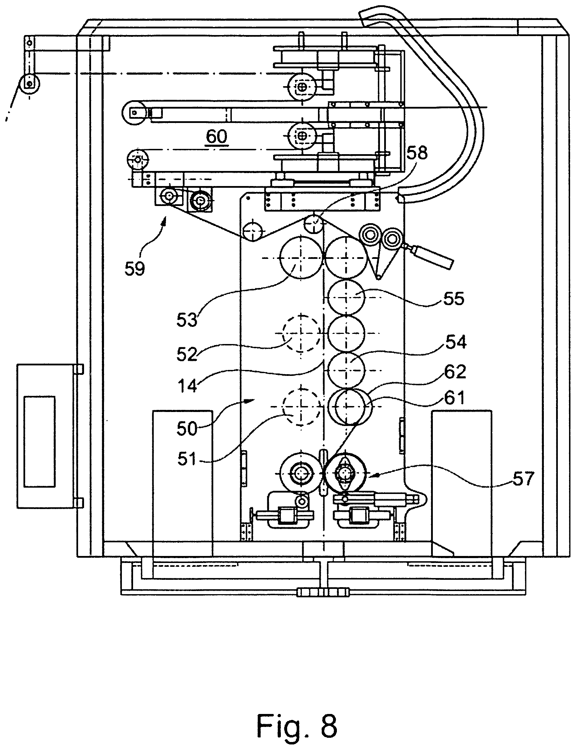

Die Behandlungswalzenstrecke 50 in Figur 8 entspricht hinsichtlich ihres Aufbaus mit fünf Walzen prinzipiell der zweiten Variante aus Figur 2 und der dritten Variante aus Figur 3, beinhaltet aber mit ihrer ersten Walze 51, ihrer dritten Walze 52 und ihrer fünften Walze 53 gleich drei kämmende Walzen, während ihre zweite Walze 54 und ihre vierte Walze 55 ortsfest rotierend gestaltet sind.

Zum Einfädeln der Doppellagenfolienbahn zu Beginn eines Blasprozesses werden die drei kämmenden Walzen, also die erste Walze 52, die dritte Walze 52 und die fünfte Walze 53, aus ihrer eingekämmten Position herausgefahren, in Figur 8 also nach links von der virtuellen Ebene 14, sodass die Doppellagenfolienbahn aus einem Nip 56 des Abzugswalzenpaares 57 einfach vertikal nach oben bis zu einer Umlenkwalze 58 geführt werden kann. Die Umlenkwalze 58 ist die erste Walze, welche jenseits der Behandlungswalzenstrecke 50 liegt. Ab der Umlenkwalze 58 wird die Doppellagenfolienbahn quer geführt, hin zu einem Einlauf 59 in eine Reversiereinheit 60.

Die erste Walze 51 kann beim Einkämmen nicht nur bis in die Ebene der feststehenden Walzen, also zweite Walze 54 und vierte Walze 55, verfahren werden (in Figur 8 dargestellt durch eine erste Kontur 61 der eingekämmten ersten Walze 51); Vielmehr kann die erste Walze 51 sogar durch diese Ebene hindurchkämmend verfahren werden, sodass sich die Mittelachse der ersten Walze 51 über diejenige Ebene hinaus bewegt, welche von den Mittelachsen der zweiten Walze 54 und der vierten Walze 55 gebildet wird. Die erste Walze 51 kann somit eine durchgekämmte Position für den Blasbetrieb annehmen (in Figur 8 dargestellt durch eine zweite Kontur 62 der ersten Walze 51).

Bei Prototypenversuchen hat sich herausgestellt, dass eine bevorzugt stufenlose Verstellbarkeit der Einkämmtiefe, insbesondere also mit einer Durchkämmtiefe durch die Ebene der ortsfesten Walzen hindurch, für die Prozesssicherheit und die resultierende Folienqualität von Vorteil sein kann.

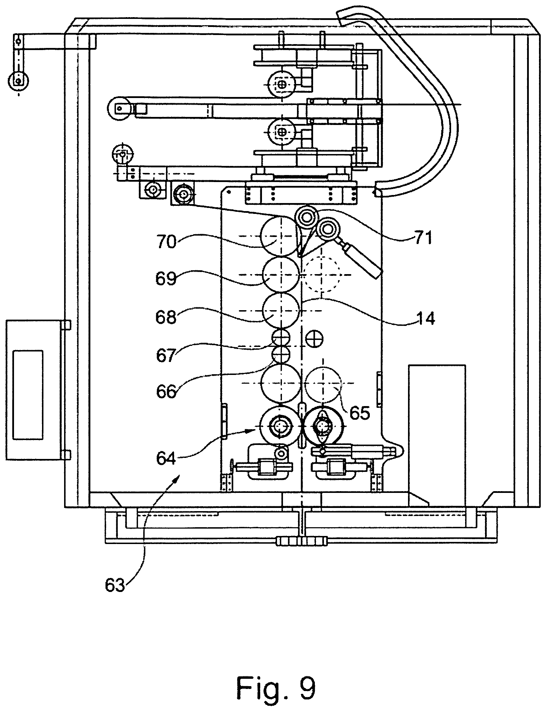

Die Behandlungswalzenstrecke 63 gemäß der siebten Variante in Figur 9 zeigt einen etwas anderen Aufbau:

Oberhalb des Quetschwalzenpaares 64 befindet sich die Behandlungswalzenstrecke 63 in vertikaler Ausrichtung.

Eine erste Walze 65 ist als Heizwalze und gleichzeitig als Haltewalze konstruiert. Sie ist durch die virtuelle Ebene 14 hindurchkämmend verfahrbar. Das Kämmen wurde vorstehend bereits mehrfach beschrieben. Seine Vorteile und auch die Möglichkeit eines Durchkämmens durch die Ebene der statischen Walzen hindurch seien nun als bekannt vorausgesetzt.

Eine zweite Walze 66 ist mit einem deutlich geringeren Durchmesser vorgesehen als die erste Walze 65.

Eine dritte Walze 67 ist ebenfalls mit geringerem Durchmesser vorgesehen als die erste Walze 65, bevorzug wie hier konstruiert mit gleichem Durchmesser wie die zweite Walze 66.

Die zweite Walze 66 und die dritte Walze 67 bilden eine Reckstation, bei welcher die dritte Walze 67 kämmend ausgeführt ist. Durch die stufenlose Verstellbarkeit mindestens einer der beiden Walzen 66, 67 der Reckstation lässt sich die Recklänge stufenlos verstellen, was sich bei Prototypenversuchen als sehr vorteilhaft herausgestellt hat.

Die zweite Walze 66, welche gleichzeitig eine erste Walze der Reckstation darstellt, wird bevorzugt mit einer gleichen Umfangsgeschwindigkeit angetrieben wie die erste Walze 65, also wie die große Haltewalze. Hinsichtlich der Funktion der Haltestation wäre die zweite Walze 66 eher als der Reckstation eigentlich der Haltestation zuzurechnen, und zwar gemeinsam mit der ersten Walze 65. Lediglich hinsichtlich ihres Durchmessers ist es auch möglich, die zweite Walze 66 gemeinsam mit der dritten Walze 67 der Reckstation zuzurechnen.

Die beiden kleinen Walzen, also die zweite Walze 66 und die dritte Walze 67, sind nicht beheizt, aber angetrieben. Dies ermöglicht es, die zweite Walze 66 und die dritte Walze 67 mit sehr kleinem Durchmesser zu konstruieren.

Die dritte Walze 67 ist allerdings mit einer höheren Umfangsgeschwindigkeit angetrieben als die zweite Walze 66. Zwischen der zweiten Walze 66 und der dritten Walze 67 bildet sich deshalb ein Streckabschnitt für die Doppellagenfolienbahn.

Wenn man annimmt, dass bei den gegebenen geometrischen Verhältnissen Haftreibung etwa über 70° um den Umfang der schneller angetriebenen dritten Walze 67 vorliegt, dann beträgt die Strecklänge des Streckabschnitts bei großen Walzendurchmessern zwischen etwa 250 mm bis 290 mm und kleinen Walzendurchmessern zwischen 100 mm und 140 mm etwa 15 cm bis 19 cm, konkret bei einem Prototypenversuch etwa 17 cm.

Der schneller angetriebenen dritten Walze 67 folgend sind in der Behandlungswalzenstrecke 63 eine erste Temperwalze 68 und eine zweite Temperwalze 69 vorgesehen, wobei letztere ebenfalls kämmend in ihre Arbeitsposition gebracht werden kann.

Den beiden Temperwalzen 68, 69 folgt eine - im hier vorliegenden Beispiel im Durchmesser leicht vergrößerte - Kühlwalze 70. Die Kühlwalze 70 verfügt über eine Anlegewalze 71.

Die Kühlwalze 70 bildet gemeinsam mit ihrer Anlegewalze 71 die letzte Station der Behandlungswalzenstrecke 63. Von dort aus wird die Doppellagenfolienbahn zum Einlauf in die Reversierung geführt.

Die Walzen der Behandlungswalzenstrecke 63 sind recht eng aneinander angeordnet, mit einem lichten Abstand in vertikaler Anordnung von nur etwa 10 mm bis 30 mm, um eine möglichst geringe Bauhöhe zu erreichen.

Bevorzugt weisen mehrere oder sogar alle Walzenoberflächen der Behandlungswalzenstrecke 63 eine raue, griffige Oberfläche auf, idealerweise mit eingelagertem Silikon.

### Bezugszeichenliste:

- 1: Blasfolienanlage
- 2: Abzugswalzenpaar
- 3: erste Abzugswalze
- 4: erster Halter
- 5: zweite Abzugswalze
- 6: Verstellzylinder
- 7: Geleitlagerhalter
- 8: Behandlungswalzenstrecke
- 9: erste Walze
- 10: zweite Walze
- 11: dritte Walze
- 12: vierte Walze
- 13: fünfte Walze
- 14: virtuelle Ebene
- 15: Mittelachse
- 16: erste Seite
- 17: gegenüberliegende zweite Seite
- 18: Abstand
- 19: Umlenkwalzen
- 20: Reversiereinheit
- 21: Maschinengestell
- 22: Temperiergeräte
- 23: Doppellagenfolienbahn
- 24: Kragung
- 25: gerader Laufweg
- 26: Geradlaufwegumlenkwalze
- 27: Einlauf
- 28: MDO-Laufweg
- 29: weitere Umlenkwalze
- 30: Planlege-Strecke
- 31: erste Walze
- 32: zweite Walze
- 33: dritte Walze
- 34: vierte Walze
- 35: passive Umlenkwalze
- 36: erste Umlenkung
- 37: Planlage-Laufweg
- 38: Anpresswalze
- 39: Andrückarm
- 40: Planlage-Dehnabschnitt
- 41: Abszisse
- 42: Ordinate
- 43: Nullpunkt
- 44: lineares Spannungszunahmefeld
- 45: erstes Maximum
- 46: Fließbereich
- 47: ansteigender Ast
- 48: Folienabriss
- 49: MDO-Arbeitsbereich
- 50: Behandlungswalzenstrecke
- 51: erste Walze
- 52: dritte Walze
- 53: fünfte Walze
- 54: zweite Walze
- 55: vierte Walze
- 56: Nip
- 57: Abzugswalzenpaar
- 58: Umlenkwalze
- 59: Einlauf
- 60: Reversiereinheit
- 61: erste Kontur
- 62: zweite Kontur
- 63: Behandlungwalzenstrecke
- 64: Quetschwalzenpaar
- 65: erste Walze
- 66: zweite Walze
- 67: dritte Walze
- 68: erste Temperwalze
- 69: zweite Temperwalze
- 70: Kühlwalze
- 71: Anlegewalze

## Patentansprüche

1. Blasfolienanlage (1), mit einer Ringdüse zum Extrudieren eines Folienschlauchs , mit einer Schlauchbildungszone zum Längs- und Querziehen des Folienschlauchs, mit einem Kühlmittel für den sich in Maschinenrichtung bewegenden Folienschlauch, mit einer Flachlegung für den Folienschlauch zu einer Doppellagenfolienbahn (23) und mit einem Abzugswalzenpaar (2, 57) jenseits des Kühlmittels zum Abziehen des Folienschlauchs, wobei in Maschinenrichtung jenseits des Abzugswalzenpaares (2, 57) eine Behandlungswalzenstrecke (8, 50, 63) zum Längsstrecken der Doppellagenfolienbahn (23) vorgesehen ist,
wobei die Maschinenrichtung vertikal von unten nach oben ausgerichtet ist und die Behandlungswalzenstrecke (8, 50, 63) oberhalb des Abzugswalzenpaares (2, 57) angeordnet ist,
wobei ein Heizmittel für die Doppellagenfolienbahn (23) vorgesehen ist, wobei eine Aufheizstrecke vor der ersten Streckwalze vorgesehen ist,
wobei oberhalb der Behandlungswalzenstrecke (8, 50, 63) eine Reversiereinrichtung (20) vorgesehen ist.

2. Blasfolienanlage nach Anspruch 1, wobei die Behandlungswalzenstrecke (8, 50, 63) eine erste Streckwalze und eine der ersten Streckwalze folgende zweite Streckwalze aufweist,
wobei das Abzugswalzenpaar (2, 57) dazu eingerichtet ist, mit einer Abzugswalzengeschwindigkeit angetrieben zu sein, und wobei die zweite Streckwalze dazu eingerichtet ist, mit einer Streckgeschwindigkeit zu laufen, welche höher liegt als die Abzugswalzengeschwindigkeit und als die Geschwindigkeit der ersten Streckwalze, sodass im Betrieb der Blasfolienanlage (1) die Doppellagenfolienbahn (23) zwischen der ersten und der zweiten Streckwalze in Maschinenrichtung gestreckt wird,
***dadurch gekennzeichnet, dass***
innerhalb der Behandlungswalzenstrecke (8, 50, 63) vor und/oder an der ersten Streckwalze eine ein Durchschlagen von Zugkraft von der zweiten Streckwalze auf das Abzugswalzenpaar (2, 57) hemmende Durchschlagbremse vorgesehen ist,
wobei zusätzlich optional
a) die Durchschlagbremse eine geschwindigkeitsgeregelte Haltewalze aufweisen kann, wobei in weiterer Spezifizierung die Haltewalze mit einer Geschwindigkeitsregelung versehen sein kann, welche näher an die Abzugswalzengeschwindigkeit einzuregeln eingerichtet ist als an die Streckgeschwindigkeit, insbesondere auf die Abzugswalzengeschwindigkeit einzuregeln eingerichtet ist; und/oder
b) die Durchschlagbremse eine Andrückwalze aufweisen kann; und/oder
c) die Durchschlagbremse eine Umschlingungswinkelführung zum Umschlingen einer ersten Walze (9, 31, 51, 65) innerhalb der Behandlungswalzenstrecke (8, 50, 63) mit zumindest 160° aufweisen kann, bevorzugt mehr als 180°.

3. Blasfolienanlage nach einem der vorstehenden Ansprüche, ***dadurch gekennzeichnet, dass*** eine Aufheizstrecke vor der ersten Streckwalze vorgesehen ist, wobei alle Walzen vor der ersten Streckwalze aktiv beheizt sind, vor allem genau eine Haltewalze und eine separate Heizwalze.

4. Blasfolienanlage nach einem der vorstehenden Ansprüche, ***dadurch gekennzeichnet, dass*** die Behandlungswalzenstrecke (8, 50, 63) eine Temperaturregelung aufweist, wobei das Heizmittel die Doppellagenfolienbahn (23) eingangs um weniger als 80 K erwärmen lässt, bevorzugt um weniger als 30 K.

5. Blasfolienanlage nach einem der vorstehenden Ansprüche, ***dadurch gekennzeichnet, dass*** die Behandlungswalzenstrecke (8, 50, 63) eine Heizwalze zum Erwärmen der Doppellagenfolienbahn (23) für eine leichtere Behandlung innerhalb der Behandlungswalzenstrecke (8, 50, 63) aufweist.

6. Blasfolienanlage nach einem der vorstehenden Ansprüche, ***dadurch gekennzeichnet, dass*** die Behandlungswalzenstrecke (8, 50, 63) einen Streckabschnitt für ein Längsstrecken der Doppellagenfolienbahn (23) aufweist, und zwar mit einem Streckbereich mit eine Länge von höchstens 120 cm, insbesondere mit einer Länge von höchstens 50 cm oder 15 cm, vor allem höchstens 10 cm oder 5 cm.

7. Blasfolienanlage nach Anspruch 5 oder 6, ***dadurch gekennzeichnet, dass*** die Behandlungswalzenstrecke (8, 50, 63) nach dem Streckabschnitt eine Temperwalze zum Entspannen der Doppellagenfolienbahn (23) nach dem Strecken aufweist.

8. Blasfolienanlage nach einem der vorstehenden Ansprüche, ***dadurch gekennzeichnet, dass*** die Temperwalze eine Temperregelung aufweist, welche die Doppellagenfolienbahn (23) um weniger als 30 K erwärmen lässt, insbesondere um weniger als 20 K.

9. Blasfolienanlage nach einem der vorstehenden Ansprüche, ***dadurch gekennzeichnet, dass*** die Behandlungswalzenstrecke (8, 50, 63) ein Kühlmittel für die Doppellagenfolienbahn (23) aufweist, insbesondere eine Kühlwalze (70).

10. Blasfolienanlage nach einem der vorstehenden Ansprüche, ***dadurch gekennzeichnet, dass*** die Behandlungswalzenstrecke (8, 50, 63) eine Regelung für eine Planlageverbesserung aufweist, also mit einem Dehnen der Doppellagenfolienbahn (23) um 0,5 % bis 5%.

11. Blasfolienanlage nach einem der Ansprüche 1 bis 9, ***dadurch gekennzeichnet, dass*** die Behandlungswalzenstrecke (8, 50, 63) eine Regelung für eine Verreckung aufweist, also mit einem Recken der Doppellagenfolienbahn (23) um mehr als 5 %, bevorzugt um mehr als 100 % oder um mehr als 200 %, 300 % oder 500 %.

12. Blasfolienanlage nach einem der vorstehenden Ansprüche, ***dadurch gekennzeichnet, dass*** die Behandlungswalzenstrecke (8, 50, 63) eine Heizwalze für die Doppellagenfolienbahn (23) mit einer Temperaturstufe von plus/minus 0 K oder von plus 1 K bis plus 80 K oder mehr im Falle schnelllaufender Doppelllagenfolienbahnen (23), insbesondere Polypropylen, aufweist, insbesondere verglichen mit der in Maschinenrichtung vorherigen Station und/oder der Walzentemperatur der Abzugswalze.

13. Blasfolienanlage nach einem der vorstehenden Ansprüche, ***dadurch gekennzeichnet, dass*** die Behandlungswalzenstrecke (8, 50, 63) eine Streckwalze für die Doppellagenfolienbahn (23) mit einer Temperaturstufe von minus 10 K, bevorzugt von plus 5 K, bis plus 30 K aufweist, oder von plus 50 K oder mehr im Falle schnelllaufender Doppelllagenfolienbahnen (23), verglichen mit der in Maschinenrichtung vorherigen Station.

14. Blasfolienanlage nach einem der vorstehenden Ansprüche, ***dadurch gekennzeichnet, dass*** die eine der Streckwalzen, insbesondere Reckwalzen, einen kleineren Walzendurchmesser als die Walze der vorhergehenden und/oder als die Walze der folgenden Station und/oder als eine Walze der übrigen Stationen der Behandlungswalzenstrecke (8, 50, 63) aufweist, insbesondere mit einem um mindestens 25 % oder mindestens 50 % reduzierten Durchmesser.

15. Blasfolienanlage nach Anspruch 14, ***dadurch gekennzeichnet, dass*** die erste und die zweite Streckwalze, insbesondere Reckwalze, beide mit kleinerem Walzendurchmesser ausgeführt sind, sodass der zweiten Streckwalze die erste Streckwalze als langsamer angetriebene Walze mit ebenfalls kleinerem Walzendurchmesser als die Walze der vorhergehenden und/oder als die Walze der folgenden Station und/oder als eine Walze der übrigen Stationen der Behandlungswalzenstrecke (8, 50, 63) vorausgeht.

16. Blasfolienanlage nach einem der vorstehenden Ansprüche, ***dadurch gekennzeichnet, dass*** die Behandlungswalzenstrecke (8, 50, 63) eine Temperwalze für die Doppellagenfolienbahn (23) mit einer Temperaturstufe von minus 10 K, bevorzugt von plus 5 K, bis plus 30 K aufweist, oder von plus 50 K oder mehr im Falle schnelllaufender Doppelllagenfolienbahnen (23), verglichen mit der in Maschinenrichtung vorherigen Station.

17. Blasfolienanlage nach einem der vorstehenden Ansprüche, ***dadurch gekennzeichnet, dass*** die Behandlungswalzenstrecke (8, 50, 63) eine Kühlwalze (70) für die Doppellagenfolienbahn (23) mit einer Temperaturstufe von minus 10 K bis minus 80 K, oder minus 100 K im Falle schnelllaufender Doppellagenfolienbahn (23) en, aufweist, verglichen mit der in Maschinenrichtung vorherigen Station.

18. Blasfolienanlage nach einem der vorstehenden Ansprüche, ***dadurch gekennzeichnet, dass*** die Behandlungswalzenstrecke (8, 50, 63) eine Einfädelhilfe mit einer verschieb- oder verschwenkbaren Walze aufweist, wobei eine Einkämmtiefe stufenlos oder stufenbehaftet einstellbar ist.

19. Blasfolienanlage nach einem der vorstehenden Ansprüche, ***dadurch gekennzeichnet, dass*** eine Silikoneinlage in einer Walzenoberfläche innerhalb der Behandlungswalzenstrecke (8, 50, 63) vorgesehen ist.

20. Verfahren zum Herstellen einer Blasfolienbahn in einer Blasfolienanlage (1), insbesondere in einer Blasfolienanlage (1) nach einem der vorstehenden Ansprüche, mit den Schritten
a. Extrudieren eines Folienschlauchs;
b. Aufblasen des Folienschlauchs auf einer Schlauchbildungszone zum Längs- und Querziehen des Folienschlauchs;
c. Kühlen des aufsteigenden Folienschlauchs mit einem Kühlmittel;
d. Flachlegen des Folienschlauchs zu einer Doppellagenfolienbahn (23) mithilfe einer Flachlegung;
e. Abziehen der Doppellagenfolienbahn (23) mit einem Abzugswalzenpaar (2, 57); **gekennzeichnet durch** die weiteren Schritte
f. Führen der Doppellagenfolienbahn (23) oberhalb des Abzugswalzenpaares (2, 57) weiter nach oben und **durch** eine Behandlungswalzenstrecke (8, 50, 63) mit einem Heizmittel, um die Doppellagenfolienbahn (23) zu erwärmen; und
g. Behandeln der Doppellagenfolienbahn (23) in der Behandlungswalzenstrecke (8, 50, 63), insbesondere Strecken der Doppellagenfolienbahn (23) in einem Streckabschnitt der Behandlungswalzenstrecke (8, 50, 63), und
h. oberhalb der Behandlungswalzenstrecke (8, 50, 63) Reversieren des Folienschlauchs in Form der Doppelgangenfolienbahn mittels einer Reversiereinrichtung (20).

21. Verfahren nach Anspruch 20,
***gekennzeichnet durch** die weiteren Schritte* Führen der Doppellagenfolienbahn (23) innerhalb der Behandlungswalzenstrecke (8, 50, 63) um eine erste Streckwalze und um eine der ersten Streckwalze folgende zweite Streckwalze,
wobei das Abzugswalzenpaar (2, 57) mit einer Abzugswalzengeschwindigkeit angetrieben wird, und wobei die zweite Streckwalze mit einer Streckgeschwindigkeit angetrieben wird, welche höher liegt als die Abzugswalzengeschwindigkeit und als die Geschwindigkeit der ersten Streckwalze, sodass im Betrieb der Blasfolienanlage (1) die Doppellagenfolienbahn (23) zwischen der ersten und der zweiten Streckwalze in Maschinenrichtung irreversibel gestreckt wird,
wobei innerhalb der Behandlungswalzenstrecke (8, 50, 63) vor und/oder an der ersten Streckwalze eine ein Durchschlagen von Zugkraft von der zweiten Streckwalze auf das Abzugswalzenpaar (2, 57) hemmende Durchschlagbremse vorgesehen ist, sodass die Durchschlagbremse ein Lager zur Aufnahme der Zugkraft darstellt.

22. Verfahren nach Anspruch 20 oder 21, wobei zum Einfädeln der Doppellagenfolienbahn (23) beim Anfahren der Blasfolienanlage (1) eine Walze der Behandlungswalzenstrecke (8, 50, 63) von ihrer Arbeitsposition verfahren oder verschwenkt wird und die Doppellagenfolienbahn (23) nach dem Einfädeln mittels eines Rückverfahrens bzw. -verschwenkens gespannt wird.

23. Verfahren nach einem der Ansprüche 20 bis 22, wobei im Behandlungsschritt g die Doppellagenfolienbahn (23) geprägt, bestrahlt und/oder einer Koronabehandlung unterzogen wird.

## Claims

1. Blown-film plant (1) having a ring nozzle for extruding a film tubing, a tubing forming zone for stretching the film tubing in longitudinal and transverse directions, a coolant for the film tubing moving in a machine direction, a lay-flat device for the film tubing to form a double-layer film sheet (23) and a take-off roller pair (2, 57) remote from the coolant for drawing off the film tubing, wherein a treatment-roller path (8, 50, 63) for stretching the double-layer film sheet (23) longitudinally is provided in the machine direction on the other side of the take-off roller pair (2, 57), wherein the machine direction is oriented vertically from bottom to top, and the treatment-roller path (8, 50, 63) being arranged above the take-off roller pair (2, 57),
wherein a heating means is provided for the double-layer film sheet (23), a heating path being provided before the first stretch roller,
wherein above the treatment-roller path (8, 50, 63) a reversing unit (20) is provided.

2. Blown-film plant according to Claim 1, the treatment-roller path (8, 50, 63) having a first stretch roller and a second stretch roller successive to the first stretch roller,
wherein the take-off roller pair (2, 57) is arranged to be driven with a take-off roller speed and the second stretch roller is arranged to run with a stretching speed which is higher than the take-off roller speed and the speed of the first stretch roller, so that during operation of the blown-film plant (1), the double-layer film sheet (23) is stretched between the first and the second stretch roller in the machine direction, **characterized in that**
within the treatment-roller path (8, 50, 63) before and/or at the first stretch roller, a transfer brake inhibiting a transfer of tensile force from the second stretch roller to the take-off roller pair (2, 57) is provided, wherein optionally in addition
a) the transfer brake can comprise a speed-controlled holding roller, wherein in further specification the holding roller can be provided with a speed control which is adapted to be adjusted closer to the take-off roller speed than to the stretching speed, in particular adapted to be adjusted to the take-off roller speed; and/or
b) the transfer brake can comprise a press on roller; and/or
c) the transfer brake can comprise a belt wrap guide for wrapping around a first roller (9, 31, 51, 65) within the treatment-roller path (8, 50, 63) with at least 160°, preferably more than 180°.

3. Blown-film plant according to one of the above Claims, **characterized in that** a heating path is provided before the first stretch roller, with all rollers before the first stretch roller being actively heated; specifically, particularly one holding roller and one separate heating roller.

4. Blown-film plant according to one of the above Claims, **characterized in that** the treatment-roller path (8, 50, 63) comprises a temperature control, the heating means heating the double-layer film sheet (23) at the input by less than 80 K, preferably less than 30 K.

5. Blown-film plant according to one of the above Claims, **characterized in that** the treatment-roller path (8, 50, 63) has a heating roller for heating the double-layer film sheet (23) to allow easier treatment within the treatment-roller path (8, 50, 63).

6. Blown-film plant according to one of the above Claims, **characterized in that** the treatment-roller path (8, 50, 63) has a stretching portion for longitudinal stretching of the double-layer film sheet (23), namely with a stretching portion having a length of at most 120 cm, in particular having a length of at most 50 cm or 15 cm, specifically at most 10 cm or 5 cm.

7. Blown-film plant according to Claim 5 or 6, **characterized in that** after the stretching portion, the treatment-roller path (8, 50, 63) has a tempering roller for relieving the stress of the double-layer film sheet (23) after stretching.

8. Blown-film plant according to one of the above Claims, **characterized in that** the tempering roller has a temperature control which causes the double-layer film sheet (23) to be heated by less than 30 K, in particular by less than 20 K.

9. Blown-film plant according to one of the above Claims, **characterized in that** the treatment-roller path (8, 50, 63) has a coolant for the double-layer film sheet (23), in particular a cooling roller (70).

10. Blown-film plant according to one of the above Claims, **characterized in that** the treatment-roller path (8, 50, 63) has a control for improvement of the flat position, i. e. with stretching of the double-layer film sheet (23) by 0.5% to 5%.

11. Blown-film plant according to one of Claims 1 through 9, **characterized in that** the treatment-roller path (8, 50, 63) has a control for strong stretching, i. e. with stretching of the double-layer film sheet (23) by more than 5%, preferably by more than 100% or by more than 200%, 300% or 500%.

12. Blown-film plant according to one of the above Claims, **characterized in that** the treatment-roller path (8, 50, 63) has a heating roller for the double-layer film sheet (23) having a temperature step of plus/minus 0 K or from plus 1 K to plus 80K or more in the case of double-layer film sheets (23) running at high speed, in particular polypropylene, in particular as compared to the previous station in the machine direction and/or the roller temperature of the take-off roller.

13. Blown-film plant according to one of the above Claims, **characterized in that** the treatment-roller path (8, 50, 63) has a stretch roller for the double-layer film sheet (23) having a temperature step of minus 10 K, preferably of plus 5 K, to plus 30 K, or of plus 50 K or more in the case of double-layer film sheets (23) running at high speed, as compared to the previous station in the machine direction.

14. Blown-film plant according to one of the above Claims, **characterized in that** one of the stretch rollers, in particular stretch forming rollers, has a smaller roller diameter than the roller of the preceding and/or the roller of the subsequent station and/or a roller of the other stations of the treatment-roller path (8, 50, 63), in particular with a diameter which is reduced by at least 25% or at least 50%.

15. Blown-film plant according to Claim 14, **characterized in that** the first and the second stretch roller, in particular stretch forming roller, are both formed with a smaller roller diameter, so that the second stretch roller is preceded by the first stretch roller as by a more slowly driven roller which in turn has a smaller roller diameter than the roller of the preceding and/or the roller of the subsequent station and/or a roller of the other stations of the treatment-roller path (8, 50, 63).

16. Blown-film plant according to one of the above Claims, **characterized in that** the treatment-roller path (8, 50, 63) has a tempering roller for the double-layer film sheet (23) with a temperature step of minus 10 K, preferably of plus 5 K, to plus 30 K, or of plus 50 K or more in the case of double-layer film sheets (23) running at high speed, as compared to the previous station in the machine direction.

17. Blown-film plant according to one of the above Claims, **characterized in that** the treatment-roller path (8, 50, 63) has a cooling roller (70) for the double-layer film sheet (23) with a temperature step of minus 10 K to minus 80 K, or minus 100 K in the case of double-layer film sheets (23) running at high speed, as compared to the previous station in the machine direction.

18. Blown-film plant according to one of the above Claims, **characterized in that** the treatment-roller path (8, 50, 63) has a pitching aid with a slidable or pivoting roller, wherein a combing depth can be set with or without steps.

19. Blown-film plant according to one of the above Claims, **characterized in that** a silicone insert is provided in a roller surface within the treatment-roller path (8, 50, 63).

20. Method for manufacturing a blown-film sheet in a blown-film plant (1), in particular in a blown-film plant (1) according to one of the above Claims, by means of the following steps:
a. extruding a film tubing,
b. inflating the film tubing in a tubing forming zone for stretching the film tubing longitudinally and transversely,
c. cooling the rising film tubing by means of a coolant,
d. flattening the film tubing to form a double-layer film sheet (23) by means of a lay-flat device,
e. drawing off the double-layer film sheet (23) by means of a take-off roller pair (2, 57),
**characterized by** the additional steps of:
f. guiding the double-layer film sheet (23) above the take-off roller pair (2, 57) further upwards and through a treatment-roller path (8, 50, 63) with a heating means in order to heat the double-layer film sheet (23); and
g. treating the double-layer film sheet (23) in the treatment-roller path (8, 50, 63), in particular stretching the double-layer film sheet (23) in a stretching portion of the treatment-roller path (8, 50, 63), and
h. above the treatment-roller path (8, 50, 63), reversing the film tubing in the form of the double-layer film sheet (23) by means of a reversing unit (20).

21. Method according to Claim 20,
**characterized by** the following additional steps:
guiding the double-layer film sheet (23) within the treatment-roller path (8, 50, 63) around a first stretch roller and around a second stretch roller which follows the first stretch roller,
the take-off roller pair (2, 57) being driven with a take-off roller speed and the second stretch roller being driven with a stretching speed which is higher than the take-off roller speed and than the speed of the first stretch roller, so that during operation of the blown-film plant (1), the double-layer film sheet (23) is stretched irreversibly in the machine direction between the first and the second stretch roller,
wherein within the treatment-roller path (8, 50, 63) before and/or at the first stretch roller, a transfer brake inhibiting a strike-through of tensile force from the second stretch roller to the take-off roller pair (2, 57) is provided, so that the transfer brake forms a bearing for absorbing the tensile force.

22. Method according to Claim 20 or 21, wherein for pitching the double-layer film sheet (23) during starting of the blown-film plant (1), a roller of the treatment-roller path (8, 50, 63) is moved or pivoted from its operating position and the double-layer film sheet (23) is tightened after pitching by driving or pivoting back.

23. Method according to one of Claims 20 to 22, wherein in treatment step g, the double-layer film sheet (23) is embossed, irradiated and/or subjected to a corona treatment.

## Revendications

1. Installation de soufflage de feuilles (1) avec une filière annulaire pour extruder un tube soufflé, avec une zone de formation de tube pour étirage longitudinal et transversal du tube soufflé, avec un un moyen de refroidissement pour le tube soufflé se déplaçant dans l'agencement de machine, avec un positionnement à plat pour le tube soufflé en une feuille continue double couche (23) et avec une paire de cylindres récepteurs (2, 57) de l'autre côté du moyen de refroidissement pour tirer le tube soufflé, une ligne de cylindres de traitement (8, 50, 63) étant prévue dans l'agencement de machine de l'autre côté de la paire de cylindres récepteurs (2, 57) pour étirage longitudinal de la feuille continue double couche (23),
l'agencement de machine étant orienté verticalement du bas vers le haut, et la ligne de cylindres de traitement (8, 50, 63) étant disposée au-dessus de la paire de cylindres récepteurs (2, 57),
un moyen de chauffage étant prévu pour la feuille continue double couche (23), une ligne de chauffage étant prévue avant le premier cylindre d'étirage,
un dispositif d'inversion (20) étant prévu au-dessus de la ligne de cylindres de traitement (8, 50, 63).

2. Installation de soufflage de feuilles, selon la revendication 1, la ligne de cylindres de traitement (8, 50, 63) comportant un premier cylindre d'étirage et un deuxième cylindre d'étirage suivant le premier cylindre d'étirage,
la paire de cylindres récepteurs (2, 57) étant agencée pour être entraînée à une vitesse de cylindre récepteur et le deuxième cylindre d'étirage étant agencé pour tourner à une vitesse d'étirage laquelle est supérieure à la vitesse de cylindre récepteur et à la vitesse du premier cylindre d'étirage de telle manière que pendant le fonctionnement de l'installation de soufflage de feuilles (1), la feuille continue double couche (23) est étirée entre le premier et le deuxième cylindre d'étirage dans l'agencement de machine,
**caractérisée en ce**
**qu'**un frein anti-rupture ralentissant une rupture de la force de traction du deuxième cylindre d'étirage sur la paire de cylindres récepteurs (2, 57) est prévu avant et/ou sur le premier cylindre d'étirage à l'intérieur de la ligne de cylindres de traitement (8, 50, 63),
en plus en option,
a) le frein anti-rupture pouvant comporter un cylindre de retenue à vitesse régulée, le cylindre de retenue pouvant être doté dans une autre spécification d'une régulation de vitesse, qui est agencée pouvant être réglée plus proche de la vitesse de cylindre récepteur que de la vitesse d'étirage, agencée notamment pouvant être réglée sur la vitesse du cylindre récepteur, et/ou
b) le frein anti-rupture pouvant comporter un cylindre de pression, et/ou
c) le frein anti-rupture pouvant comporter un guidage angulaire d'enroulement pour enrouler un premier cylindre (9, 31, 51, 65) à l'intérieur de la ligne de cylindres de traitement (8, 50, 63) à au moins 160°, de préférence à plus de 180°.

3. Installation de soufflage de feuilles, selon l'une quelconque des revendications précédentes, **caractérisée en ce qu'**une ligne de chauffage est prévue avant le premier cylindre d'étirage, tous les cylindres étant chauffés de façon active avant le premier cylindre d'étirage, surtout exactement un cylindre de retenue et un cylindre de chauffage séparé.

4. Installation de soufflage de feuilles, selon l'une quelconque des revendications précédentes, **caractérisée en ce que** la ligne de cylindres de traitement (8, 50, 63) présente une régulation de température, le moyen de chauffage pouvant réchauffer la feuille continue double couche (23) en entrée de moins de 80 K, de préférence de moins de 30 K.

5. Installation de soufflage de feuilles, selon l'une quelconque des revendications précédentes, **caractérisée en ce que** la ligne de cylindres de traitement (8, 50, 63) comporte un cylindre de chauffage pour réchauffer la feuille continue double couche (23) pour un traitement plus léger à l'intérieur de la ligne de cylindres de traitement (8, 50, 63).

6. Installation de soufflage de feuilles, selon l'une quelconque des revendications précédentes, **caractérisée en ce que** la ligne de cylindres de traitement (8, 50, 63) comporte une section d'étirage pour un étirage longitudinal de la feuille continue double couche (23) et en réalité avec une zone d'étirage d'une longueur maximale de 120 cm, notamment d'une longueur maximale de 50 cm ou 15 cm, surtout au maximum de 10 cm ou 5 cm.

7. Installation de soufflage de feuilles, selon la revendication 5 ou 6, **caractérisée en ce que** la ligne de cylindres de traitement (8, 50, 63) comporte après la section d'étirage, un cylindre de recuit pour détendre la feuille continue double couche (23) après l'étirage.

8. Installation de soufflage de feuilles, selon l'une quelconque des revendications précédentes, **caractérisée en ce que** le cylindre de recuit comporte une régulation de recuit qui permet de réchauffer la feuille continue double couche (23) de moins de 30 K, notamment de moins de 20 K.

9. Installation de soufflage de feuilles, selon l'une quelconque des revendications précédentes, **caractérisée en ce que** la ligne de cylindres de traitement (8, 50, 63) comporte un moyen de refroidissement pour la feuille continue double couche (23), notamment un cylindre de refroidissement (70).

10. Installation de soufflage de feuilles, selon l'une quelconque des revendications précédentes, **caractérisée en ce que** la ligne de cylindres de traitement (8, 50, 63) comporte une régulation pour une amélioration de la planéité, donc avec une extension de la feuille continue double couche (23) de 0,5 % à 5 %.

11. Installation de soufflage de feuilles, selon la revendication 1 à 9, **caractérisée en ce que** la ligne de cylindres de traitement (8, 50, 63) comporte une régulation pour un étirage, donc avec un étirage de la feuille continue double couche (23) de plus de 5 %, de préférence de plus de 100 % ou de plus de 200 %, 300 % ou 500 %.

12. Installation de soufflage de feuilles, selon l'une quelconque des revendications précédentes, **caractérisée en ce que** la ligne de cylindres de traitement (8, 50, 63) comporte un cylindre de chauffage pour la feuille continue double couche (23) avec un palier de température de plus/moins 0 K ou de plus 1 K jusqu'à plus 80 K ou plus en cas de feuilles continues double couche (23) à passage rapide, en particulier le polypropylène, notamment en comparaison avec le poste précédent dans l'agencement de machine et/ou avec la température de cylindre du cylindre récepteur.

13. Installation de soufflage de feuilles, selon l'une quelconque des revendications précédentes, **caractérisée en ce que** la ligne de cylindres de traitement (8, 50, 63) comporte un cylindre d'étirage pour la feuille continue double couche (23) avec un palier de température de moins de 10 K, de préférence de plus de 5 K à plus 30 K, ou de plus 50 K ou plus en cas de feuilles continues double couche (23) à passage rapide, notamment en comparaison avec le poste précédent dans l'agencement de machine.

14. Installation de soufflage de feuilles, selon l'une quelconque des revendications précédentes, **caractérisée en ce qu'**un des cylindres d'étirage, notamment des cylindres d'étirage-planage sous tension, comporte un diamètre de cylindre plus faible que le cylindre du poste précédent et/ou que le cylindre du poste suivant et/ou que d'un cylindre des autres postes de la ligne de cylindres de traitement (8, 50, 63), en particulier avec un diamètre réduit d'au moins 25 % ou d'au moins 50 %.

15. Installation de soufflage de feuilles, selon la revendication 14, **caractérisée en ce que** le premier et le deuxième cylindre d'étirage, en particulier le cylindre d'étirage-planage sous tension, sont exécutés tous les deux avec un diamètre de cylindre plus petit de telle sorte que le deuxième cylindre d'étirage est précédé par le premier cylindre d'étirage en tant que cylindre entraîné plus lentement avec un diamètre de cylindre également plus petit que le cylindre du poste précédent et/ou que le cylindre du poste suivant et/ou qu'un cylindre des autres postes de la ligne de cylindres de traitement (8, 50, 63).

16. Installation de soufflage de feuilles, selon l'une quelconque des revendications précédentes, **caractérisée en ce que** la ligne de cylindres de traitement (8, 50, 63) comporte un cylindre de recuit pour la feuille continue double couche (23) avec un palier de température de moins 10 K, de préférence de plus 5 K, à plus 30 K ou de plus 50 K ou plus en cas de feuilles continues double couche (23) à passage rapide, en comparaison avec le poste précédent dans l'agencement de machine.

17. Installation de soufflage de feuilles, selon l'une quelconque des revendications précédentes, **caractérisée en ce que** la ligne de cylindres de traitement (8, 50, 63) comporte un cylindre de refroidissement (70) pour la feuille continue double couche (23) avec un palier de température de moins 10 K à moins 80 K ou moins 100 K, en cas de feuilles continues double couche (23) à passage rapide, en comparaison avec le poste précédent dans l'agencement de machine.

18. Installation de soufflage de feuilles, selon l'une quelconque des revendications précédentes, **caractérisée en ce que** la ligne de cylindres de traitement (8, 50, 63) comporte une assistance d'embobinage avec un cylindre mobile ou pouvant pivoter, une profondeur d'engrènement pouvant être réglable en continu ou par palier.

19. Installation de soufflage de feuilles, selon l'une quelconque des revendications précédentes, caractérisée on ce qu'une insertion de silicone est prévue dans une surface de cylindre à l'intérieur de la ligne de cylindres de traitement (8, 50, 63).

20. Procédé pour la fabrication d'une feuille continue soufflée dans une installation de soufflage de feuilles (1), en particulier dans une installation de soufflage de feuilles (1), selon l'une quelconque des revendications précédentes, avec les étapes suivantes
a. extrusion d'un tube soufflé,
b. soufflage du tube soufflé sur une zone de formation de tube pour étirage longitudinal et transversal du tube soufflé,
c. refroidissement du tube soufflé ascendant avec un moyen de refroidissement,
d. pose à plat du tube soufflé en une feuille continue double couche (23) à l'aide d'un positionnement à plat,
e. réception de la feuille continue double couche (23) avec une paire de cylindres récepteurs (2, 57) ;
**caractérisé par** les autres étapes
f. guidage de la feuille continue double couche (23) au-dessus de la paire de cylindres récepteurs (2, 57) plus vers le haut et à travers une ligne de cylindres de traitement (8, 50, 63) avec un moyen de chauffage pour réchauffer la feuille continue double couche (23), et
g. traitement de la feuille continue double couche (23) dans la ligne de cylindres de traitement (8, 50, 63), en particulier étirage de la feuille continue double couche (23) dans une section d'étirage de la ligne de cylindres de traitement (8, 50, 63), et
h. inversion du tube soufflé au-dessus de la ligne de cylindres de traitement (8, 50, 63) sous forme de la feuille continue double couche (23) au moyen d'un dispositif d'inversion (20).

21. Procédé selon la revendication 20,
**caractérisé par** les autres étapes
guidage de la feuille continue double couche (23) à l'intérieur de la ligne de cylindres de traitement (8, 50, 63) autour d'un premier cylindre d'étirage et autour d'un deuxième cylindre d'étirage suivant le premier cylindre d'étirage,
la paire de cylindres récepteurs (2, 57) étant entraînée à une vitesse de cylindre récepteur et le deuxième cylindre d'étirage étant entraîné à une vitesse d'étirage, qui est supérieure à la vitesse de cylindre récepteur et à la vitesse du premier cylindre d'étirage de telle sorte que pendant le fonctionnement de l'installation de soufflage de feuilles (1), la feuille continue double couche (23) est étirée de manière irréversible entre le premier et le deuxième cylindre d'étirage dans l'agencement de machine, un frein anti-rupture ralentissant une rupture de la force de traction du deuxième cylindre d'étirage sur la paire de cylindres récepteurs (2, 57) étant prévu avant et/ou sur le cylindre d'étirage à l'intérieur de la ligne de cylindres de traitement (8, 50, 63) avant et/ou sur le premier cylindre d'étirage de telle manière que le frein anti-rupture représente un palier pour la réception de la force de traction.

22. Procédé selon la revendication 20 ou 21, un cylindre de la ligne de cylindres de traitement (8, 50, 63) étant déplacé ou pivoté de sa position de travail pour embobiner la feuille continue double couche (23) lors de la mise en marche de l'installation de soufflage de feuilles (1) et la feuille continue double couche (23) étant tendue après l'embobinage au moyen d'un retour ou repivotement.

23. Procédé selon les revendications 20 à 22, la feuille continue double couche (23) étant grainée, irradiée et/ou soumise à un traitement à décharge à effet en couronne dans l'étape de traitement «g».
